# EUROPÄISCHE PATENTANMELDUNG

(11) **EP 4 706 992 A1**
(43) Veröffentlichungstag der Anmeldung: **11.03.2026**
(21) Anmeldenummer: 25197667.6
(22) Anmeldetag: 22.08.2025
(51) Int. Cl.: B60C 11/03, B60C 11/04, B60C 11/13

(54) **REIFEN FÜR EIN LEICHTFAHRZEUG**

(30) Priorität: 10.09.2024 DE 102024208594
(71) Anmelder: Continental Reifen Deutschland GmbH, 30175 Hannover (DE)
(72) Erfinder: Sudikatis, Florian, 30175 Hannover (DE); Lengemann, Daniel, 30175 Hannover (DE)
(74) Vertreter: Continental Corporation

(57) **Zusammenfassung**

Die Erfindung betrifft einen Reifen mit einem Laufstreifen (5), der eine Laufstreifenmitte (5M) und sich beidseitig daran anschließende Laufstreifenschultern (5S) aufweist, wobei auf einer Oberfläche (4a) des Reifens (4) innerhalb von Flächenbändern Aeroelemente (8) angeordnet sind, die jeweils eine Verwirbelungs-Flanke (FV) aufweisen zum Verwirbeln von entgegen der Vorwärtslaufrichtung (LV) strömender Luft, sowie jeweils eine der Verwirbelungs-Flanke (FV) gegenüberliegende Gegenflanke (FG),
wobei die Verwirbelungs-Flanke (FV) unter einem ersten Flankenwinkel (a1) von zwischen 0° und 45° auf der Oberfläche (4a) des Reifens (4) und unter einem zweiten Flankenwinkel (a2) zu der Umfangsrichtung (uR) des Reifens (4) verläuft.

Erfindungsgemäß ist vorgesehen, dass die Aeroelemente (8) innerhalb des jeweiligen Flächenbandes zumindest in der Laufstreifenschulter des Laufstreifens und/oder in den Seitenwänden und/oder in den Wulstbereichen verlaufen, und der zweite Flankenwinkel (α2) außerhalb der Laufstreifenmitte (5M) zwischen 30° und 85°, vorzugsweise zwischen 30° und 60°, insbesondere zwischen 40° und 50°, beträgt.

## Beschreibung

Die Erfindung betrifft einen Reifen für ein Leichtfahrzeug, beispielsweise ein Fahrrad, insbesondere Rennrad, gemäß dem Oberbegriff des Anspruches 1.

Reifen für Leichtfahrzeuge, insbesondere Fahrräder, einschließlich Elektrofahrräder, insbesondere Rennräder, Lastenräder, Gravelbikes, oder dergleichen, können sog. Aeroelemente aufweisen, die in den Reifen oberflächlich eingebettet sind und dazu dienen, den Reifen aerodynamisch zu optimieren. Insbesondere bei hohen Fahrgeschwindigkeiten wird dabei der aerodynamische Fahrwiderstand relevant, so dass für eine Optimierung der Fahreigenschaften entsprechende Maßnahmen getroffen werden können.

**In** DE 10 2020 113 270 A1 und DE 10 2021 112 635 A1 sind dazu beispielsweise flächige Aeroelemente auf den Seitenflächen bzw. den Laufstreifenschultern des Reifens, die sich seitlich an die zentrale Lauffläche bzw. die Laufstreifenmitte anschließen, angeordnet. Die zentrale Lauffläche erstreckt sich dabei über den Reifenzenit über ein Winkelsegment von mehr als 20° und weniger als 70° quer zur Umfangsrichtung der Lauffläche. Die Aeroelemente definieren umlaufende Winkelbänder, die sich demnach jeweils bei einem Winkel von mehr als 10° und weniger als 35° von der zentralen Längsschnittebene bzw. dem Reifenzenit aus beginnen und zu beiden Seiten des Reifenzenits verlaufen. Ferner ist ein Flächenanteil der Aeroelemente an der Fläche eines Winkelbandes größer als 5% und kleiner als 25%. Die Aeroelemente sind als Erhebungen oder Vertiefungen mit unterschiedlichen Strukturen, beispielsweise taschen-, topf- oder wannenartige Strukturen, ausgebildet. Bei dieser Ausführung des Reifens sind nur sehr wenige Aeroelemente vorgesehen, die zu einer optimierten laminaren Strömung beitragen sollen. Zudem sind diese nur auf der Laufstreifenschulter angeordnet, wodurch nur eine begrenzte Fläche des Reifens tatsächlich genutzt wird, um die Aerodynamik zu optimieren. Der aerodynamische Effekt ist also begrenzt.

Zusätzlich ist in DE 10 2020 113 270 A1 und DE 10 2021 112 635 A1 auf dem Umfang der Lauffläche bzw. im Reifenzenit des Reifens wenigstens eine Indikatoreinheit ausgebildet, welche eine Maß für ein sich durch den Gebrauch des Reifens veränderndes Verhältnis einer radialen Halbachse zu einer axialen Halbachse und eine sich damit verändernde aerodynamische Qualität des Reifens anzeigt. Damit gibt die Indikatoreinheit den Abrieb der Laufstreifenmitte an, was den Nachteil hat, dass daraus keine exakten Aussagen zu dem Verschleiß der Aeroelemente in der Laufstreifenschulter getroffen werden können, da sich die Laufstreifenschulter im Betrieb anders als die Laufstreifenmitte abnutzt.

Der folgenden Erfindung liegt daher die Aufgabe zugrunde, einen Reifen für ein Leichtfahrzeug bereitzustellen, bei dem der aerodynamische Effekt weiter verbessert werden kann.

Diese Aufgabe wird durch einen Reifen gemäß dem unabhängigen Anspruch 1 gelöst. Die Unteransprüche geben bevorzugte Weiterbildungen an.

Erfindungsgemäß ist demnach ein Reifen für eine Radanordnung vorgesehen, mit einer festgelegten Vorwärtslaufrichtung und mit einem in Umfangsrichtung verlaufenden Laufstreifen, der sich in axialer Richtung beidseitig eines Reifenzenits (auf jeder Seite) über jeweils eine Gesamt-Laufstreifen-Bogenlänge und jeweils über einen Gesamt-Winkelbereich erstreckt,
wobei der Laufstreifen eine den Reifenzenit überdeckende Laufstreifenmitte und sich in axialer Richtung beidseitig daran anschließende Laufstreifenschultern aufweist, wobei sich in axialer Richtung jeweils Seitenwände an die Laufstreifenschultern anschließen, die sich jeweils bis zu Wulstbereichen des Reifens erstrecken,
wobei auf einer Oberfläche des Reifens innerhalb von Flächenbändern, die beidseitig des Reifenzenits symmetrisch zueinander liegen und die jeweils in die Umfangsrichtung verlaufen, zumindest in Umfangsrichtung zueinander beabstandete Aeroelemente angeordnet sind, wobei die Aeroelemente jeweils eine Verwirbelungs-Flanke aufweisen zum Verwirbeln von entgegen der Vorwärtslaufrichtung entlang der Oberfläche des Reifens strömender Luft im Betrieb des Reifens, sowie auch eine Gegenflanke, die der Verwirbelungs-Flanke in Umfangsrichtung gegenüberliegt,
wobei die Verwirbelungs-Flanke des jeweiligen Aeroelementes unter einem ersten Flankenwinkel zu einer Normalen, die benachbart zu der Verwirbelungs-Flanke senkrecht von der Oberfläche des Reifens absteht, verläuft und unter einem zweiten Flankenwinkel zu der Umfangsrichtung des Reifens verläuft, wobei der erste Flankenwinkel zwischen 0° und 45°, insbesondere zwischen 5° und 20°, beträgt, und
wobei die Gegenflanke des jeweiligen Aeroelementes unter einem dritten Flankenwinkel zu einer Normalen, die benachbart zu der Gegenflanke senkrecht von der Oberfläche des Reifens absteht, verläuft, wobei der dritte Flankenwinkel größer als 10° beträgt und vorzugsweise auch größer gleich dem ersten Flankenwinkel ist, d.h. flacher als die Verwirbelungs-Flanke verläuft,
wobei die Aeroelemente innerhalb des jeweiligen Flächenbandes zumindest in der Laufstreifenschulter des Laufstreifens und/oder in den Seitenwänden und/oder in den Wulstbereichen des Reifens verlaufen, und
wobei der zweite Flankenwinkel außerhalb der Laufstreifenmitte bzw. innerhalb der Laufstreifenschulter und/oder innerhalb den Seitenwänden und/oder innerhalb der Wulstbereiche zwischen 30° und 85°, vorzugsweise zwischen 30° und 60°, insbesondere zwischen 40° und 50°, beträgt.

Unter Aeroelementen werden also Elemente am Reifen verstanden, die aufgrund der Anordnung und des Verlaufs der Flanken in der Lage sind, effektiv Luft zu verwirbeln, die im Betrieb des Reifens über die Oberfläche strömt. Weiterhin sind die Aeroelemente innerhalb des jeweiligen Flächenbandes derartig gleichmäßig (wiederholend) bzw. periodisch über den Umfang des Reifens verteilt, dass bei entsprechend hohen Rotations-Geschwindigkeiten des Reifens von beispielsweise 35km/h und mehr durch die über den Umfang gleichmäßig bzw. periodisch auftretenden oberflächennahen Verwirbelungen eine laminare Strömung um den Reifen erzeugt werden kann. Durch diese laminare Strömung können die aerodynamischen Eigenschaften des Reifens signifikant verbessert werden.

Daher unterscheiden sich derartige Aeroelemente von einer herkömmlichen Profilierung zum einen durch die Anordnung der Flanken, die vorliegend bei einer aerodynamischen Optimierung außerhalb der Laufstreifenmitte in einem Winkel von zwischen 30° und 85°, vorzugsweise zwischen 30° und 60°, insbesondere zwischen 40° und 50°, angeordnet sind. Bei einer herkömmlichen Profilierung werden außerhalb der Laufstreifenmitte zum Optimieren des Grips bei einer Kurvenfahrt Winkel der Profilkanten von zwischen 10° und 20° zur Umfangsrichtung gewählt. Größere Winkel, bevorzugt Winkel von 45° +-10°, haben nämlich außerhalb der Laufstreifenmitte lediglich einen aerodynamischen Nutzen.

Zum anderen weisen die Verwirbelungs-Flanke und die gegenüberliegende Gegenflanke der Aeroelemente vorzugsweise keine identischen Flankenwinkel auf, die senkrecht oder nahezu senkrecht zur Oberfläche stehen, wie dies bei herkömmlichen Profilblöcken der Fall ist. Vielmehr ist die Verwirbelungs-Flanke, an der die anströmende Luft abfällt und verwirbelt wird, innerhalb des o.g. Bereiches für den ersten Flankenwinkel vorzugsweise steiler ausgeführt als die Gegenflanke, die demnach flacher abfällt, d.h. α3>α1. Dadurch kann die entstehende laminare Strömung und damit die Aerodynamik optimiert werden.

Durch derartig ausgeführte Aeroelemente werden also die aerodynamischen Eigenschaften des Reifens signifikant verbessert, wobei der Verlauf der Verwirbelungs-Flanke gezielt derartig angewinkelt zur Umfangsrichtung gewählt ist, dass durch die Verwirbelungs-Flanken nicht nur eine laminare Strömung erzeugt wird. Gleichzeitig kann nämlich durch die Anwinkelung der Verwirbelungs-Flanken gegenüber Umfangsrichtung und der Aeroelemente insgesamt auch ein gezieltes Leiten von Luft nach axial außen erreicht werden. Weiterhin kann durch die unterschiedliche Wahl des ersten und dritten Flankenwinkels (α3>α1) das Abrollverhalten verbessert werden und in den Aeroelementen können sich aufgrund der zumindest weniger stark ansteigenden Gegenflanke gefangene Steine leichter wieder lösen.

Wenn die Aeroelemente nicht nur in der Laufstreifenschulter angeordnet sind, kann zudem die gesamte nutzbare Fläche des Reifens, insbesondere auch in der Seitenwand und/oder in den Wulstbereichen dazu verwendet werden, eine laminare Strömung zu erzeugen, so dass die aerodynamischen Eigenschaften insgesamt weiter verbessert werden.

Vorzugsweise ist weiterhin vorgesehen, dass die Laufstreifenmitte ausgehend von dem Reifenzenit beidseitig in axialer Richtung über jeweils eine erste Laufstreifen-Bogenlänge verläuft und die beiden sich daran in axialer Richtung anschließenden Laufstreifenschultern jeweils über eine zweite Laufstreifen-Bogenlänge verlaufen, wobei die erste Laufstreifen-Bogenlänge und die zweite Laufstreifen-Bogenlänge zusammen die Gesamt-Laufstreifen-Bogenlänge des Laufstreifens ergeben, wobei
- die erste Laufstreifen-Bogenlänge zwischen 20% und 45% eines nominellen Reifenradius beträgt; und/oder
- die zweite Laufstreifen-Bogenlänge zwischen 60% und 85% eines nominellen Reifenradius beträgt.

Die Laufstreifenmitte ist dabei in der Regel der Bereich des Reifens, in dem der Reifen mit dem jeweiligen nominellen Reifenradius auf einem Untergrund aufliegt und abrollt und der sich während der Benutzung hauptsächlich abnutzt. Dieser Bereich lässt sich durch die entsprechende Laufstreifen-Bogenlänge klar definieren. Die Laufstreifenschulter bildet dann den Übergang zwischen der Laufstreifenmitte und der Seitenwand des Reifens, wobei die Laufstreifenschulter in der Regel nicht (während der Geradeausfahrt) oder weniger stark (in einer Kurvenfahrt) abgenutzt wird und daher eine gute Position für die Aeroelemente darstellt.

Vorzugsweise lässt sich diese Abgrenzung der verschiedenen Bereiche des Laufstreifens auch dadurch definieren, dass die Laufstreifenmitte ausgehend von dem Reifenzenit beidseitig in axialer Richtung innerhalb eines ersten Winkelbereiches verläuft und die beiden sich daran in axialer Richtung anschließenden Laufstreifenschultern jeweils innerhalb eines zweiten Winkelbereiches verlaufen, wobei der erste Winkelbereich und der zweite Winkelbereich zusammen den Gesamt-Winkelbereich ergeben, wobei
- der erste Winkelbereich zwischen 10° und 35° überdeckt; und/oder;
- der zweite Winkelbereich zwischen 10° und 50° überdeckt.

Demnach ist vorzugsweise vorgesehen, dass die Gesamt-Laufstreifen-Bogenlänge zwischen 105% und 130% eines nominellen Reifenradius beträgt; und/oder der Gesamt-Winkelbereich zwischen 20° und 85°, bevorzugt zwischen 30° und 75°, besonders bevorzugt von zwischen 50° und 60°, überdeckt. Auf diese Weise lässt sich die Ausdehnung des gesamten Laufstreifens wahlweise über die Bogenlänge oder den Winkelbereich definieren.

Vorzugsweise ist weiterhin vorgesehen, dass
- mindestens ein Aeroelement innerhalb der jeweiligen Flächenbänder an dem Reifen sowohl innerhalb der Laufstreifenschulter als auch innerhalb der Seitenwand und/oder innerhalb der Laufstreifenmitte verläuft; und/oder
- mindestens ein Aeroelement innerhalb der jeweiligen Flächenbänder an dem Reifen sowohl innerhalb der Seitenwand als auch innerhalb des Wulstbereiches verläuft.

Die Position der Aeroelemente ist also nicht nur auf die Laufstreifenschulter beschränkt, so dass insgesamt eine größere ohnehin zur Verfügung stehende Fläche am Reifen ausgenutzt werden kann, um laminare Strömungen zu erhalten.

Dies ergibt insgesamt eine weitere aerodynamische Verbesserung.

Vorzugsweise ist weiterhin vorgesehen, dass
- für den Fall, dass sämtliche Aeroelemente innerhalb der jeweiligen Flächenbänder an dem Reifen ausschließlich in der Laufstreifenschulter verlaufen, ein Flächenanteil sämtlicher Aeroelemente am Reifen zwischen 9% und 25% einer sichtbaren Gesamtfläche des Reifens beträgt, und/oder der Flächenanteil sämtlicher Aeroelemente innerhalb eines Flächenbandes an der Gesamtfläche des jeweiligen Flächenbandes größer als 25% beträgt, und
- für den Fall, dass die Aeroelemente innerhalb der jeweiligen Flächenbänder an dem Reifen nicht oder nicht ausschließlich in der Laufstreifenschulter angeordnet sind, beispielsweise in der Laufstreifenmitte und/oder in den Seitenwänden und/oder in den Wulstbereichen verlaufen, der Flächenanteil sämtlicher Aeroelemente am Reifen zwischen 0.1% und 100% der sichtbaren Gesamtfläche des Reifens beträgt und/oder der Flächenanteil sämtlicher Aeroelemente innerhalb eines Flächenbandes an der Gesamtfläche des jeweiligen Flächenbandes größer als 5% beträgt.

Es wird also in dem Fall einer geringeren zur Verfügung stehenden Fläche am Reifen (nur in der Laufstreifenschulter) gezielt eine größere Anzahl an Aeroelementen bereitgestellt, um die Effektivität oder Robustheit der laminaren Strömung zu erhöhen. Für den Fall, dass eine größere Fläche zur Verfügung steht (auch in den Seitenwänden, Wulstbereichen, Laufstreifenmitte) kann die Anzahl der Aeroelemente je nach Anwendungsfokus des Reifens auch geringer ausfallen, es können dann aber insgesamt über eine größere Bogenlänge laminare Strömungen am Reifen erzeugt werden, wodurch die Effektivität ebenfalls gesteigert wird. Dabei kann beispielsweise vorgesehen sein, dass der Flächenanteil sämtlicher Aeroelemente am Reifen
- für Reifen mit einem Fokus auf glattem Untergrund, z.B. Asphalt, maximal 25% der sichtbaren Gesamtfläche des Reifens,
- für Reifen mit einem Fokus auf teilweise glattem und teilweise schlottrigem

Untergrund maximal 40% der sichtbaren Gesamtfläche des Reifens, und
- für Reifen mit einem Fokus auf Offroad größer als 35% der sichtbaren Gesamtfläche des Reifens beträgt.

Vorzugsweise ist dabei weiterhin vorgesehen, dass sämtliche Aeroelemente am Reifen beidseitig des Reifenzenits innerhalb von maximal zwei Flächenbändern je Reifenseite, vorzugsweise lediglich innerhalb eines Flächenbandes je Reifenseite, angeordnet sind. Daher verlaufen die Aeroelemente je Reifenseite vorzugsweise nahezu unterbrechungsfrei, so dass durchgängig bzw. über eine große Fläche eine gleichmäßige laminare Strömung ohne Störungen erzeugt werden kann.

Vorzugsweise ist weiterhin vorgesehen, dass innerhalb eines Flächenbandes an dem Reifen als Aeroelemente lediglich Erhebungen oder lediglich Vertiefungen oder eine Kombination aus Erhebungen und Vertiefungen angeordnet sind, wobei sich diese in gleichmäßiger bzw. periodischer Weise innerhalb des Flächenbandes über den Umfang des Reifens abwechseln. Dabei können innerhalb eines Flächenbandes auch in Form und/oder Größe unterschiedlich ausgeführte Erhebungen und/oder in Form und/oder Größe unterschiedlich ausgeführte Vertiefungen miteinander kombinieren. Ferner können sich innerhalb eines Flächenbandes gleichmäßig wiederholend mindestens eine Erhebung und mindestens eine Vertiefung zumindest in die Umfangsrichtung abwechseln.

Die Verwirbelungs-Flanke lässt sich also variabel auf unterschiedliche Art und Weise auf der Oberfläche des Reifens ausbilden, wobei dann vorzugsweise vorgesehen ist, dass
- die Verwirbelungs-Flanke bei einer Ausführung des jeweiligen Aeroelements als Erhebung unter dem ersten Flankenwinkel gegenüber der Normalen von der Oberfläche des Reifens absteht und in Vorwärtslaufrichtung gesehen vorzugsweise eine nachlaufende Flanke des jeweiligen Aeroelements ist, und
- die Verwirbelungs-Flanke bei einer Ausführung des jeweiligen Aeroelements als Vertiefung unter dem ersten Flankenwinkel gegenüber der Normalen von der Oberfläche des Reifens ausgehend in den Reifen hineinragt und in Vorwärtslaufrichtung gesehen vorzugsweise eine führende Flanke des jeweiligen Aeroelements ist.

Durch die Ausbildung der Aeroelemente als Erhebungen und/oder Vertiefungen können zudem nicht nur die aerodynamischen Eigenschaften verbessert werden, sondern je nach Auslegung des Reifens auch gripverbessernde Maßnahmen getroffen werden. Insbesondere bei einer Erhebung kann der Verwirbelungs-Flanke am jeweiligen Aeroelement in Umfangsrichtung eine Gegenflanke gegenüberliegen, die je nach Querschnittsform der Erhebung über mindestens eine Seitenflanke mit der Verwirbelungs-Flanke verbunden ist, wobei die jeweilige Erhebung dann durch eine entsprechend der Querschnittsform ausgeführte Deckfläche bedeckt ist. Die Höhe der Gegenflanke, die Ausrichtung der Gegenflanke gegenüber der Umfangsrichtung sowie auch die Höhe und die Ausrichtung der mindestens einen Seitenflanke können dann so gewählt werden, dass über die Aeroelemente gleichzeitig auch der Grip des Reifens verbessert werden kann. Wie oben beschrieben sind jedoch für eine aerodynamische Auslegung oder Optimierung entsprechend flachere Flanken (in Relation zur Verwirbelungs-Flanke) zu wählen.

Dabei wirken die Gegenflanke und die Seitenflanke(n) bei einer größeren Höhe und/oder Steilheit eher gripverbessernd, insbesondere durch eine Ausbildung als eine Bremskante und/oder eine Lenkkante, d.h. mit einem etwa senkrechten Verlauf der jeweiligen Flanke ausgehend von der Oberfläche des Reifens. Demgegenüber werden bei einer gegenüber der Höhe der Verwirbelungs-Flanke niedrigeren Gegenflanke eher die aerodynamischen Eigenschaften verbessert, da sich die laminare Strömung ungestörter in Umfangsrichtung entlang des Reifens bzw. entlang der dann vorzugsweise in Strömungsrichtung abfallenden Deckfläche der Erhebungen ausbreiten kann. Demnach kann die Form der Erhebung je nach Optimierung (gripoptimiert, aerodynamikoptimiert) gezielt gewählt werden. Auch bei der Vertiefung liegt der Verwirbelungs-Flanke eine entsprechende Gegenflanke gegenüber, die je nach Ausführung auch über mindestens eine Seitenflanke verbunden sein können, so dass eine ähnliche Optimierung wie bei einer Erhebung erfolgen kann.

Dabei ist insbesondere vorgesehen, dass die als Erhebungen ausgeführten Aeroelemente eine Aeroelement-Höhe aufweisen, die zwischen 0.1mm und 8mm, vorzugsweise zwischen 1mm und 6.5mm, beträgt, und/oder
die als Vertiefungen ausgeführten Aeroelemente eine Aeroelement-Tiefe aufweisen, die zwischen 0.1mm und 8mm, vorzugsweise zwischen 0.5mm und 3.5mm, beträgt,
wobei die Aeroelement-Höhe und/oder die Aeroelement-Tiefe vorzugsweise abhängig von einer nominellen Reifenbreite gewählt sind.

Dabei kann je nach Auslegung des Reifens, insbesondere in Abhängigkeit der Ausführung der Gegenflanke, vorgesehen sein, dass die Aeroelement-Höhe über die jeweilige Erhebung variiert, beispielsweise die Deckfläche mit einem Flächenwinkel angewinkelt zu der Oberfläche des Reifens verläuft, insbesondere in die Vorwärtslaufrichtung abfallend, um eine optimierte Strömung zu erreichen, wobei ergänzend die Aeroelement-Höhe insbesondere von in der Laufstreifenmitte angeordneten Erhebungen zur Laufstreifenmitte hin abfällt. Dadurch kann in der Laufstreifenmitte, die sich in der Regel stärker abnutzt, genügend Gummimaterial zur Verfügung gestellt werden.

Vorzugsweise kann weiterhin vorgesehen sein, dass die Aeroelement-Tiefe über die jeweilige Vertiefung variiert, insbesondere bei einer Anordnung der Vertiefung in der Reifenschulter maximal ist und zu der Laufstreifenmitte hin und/oder zu der Seitenwand hin abnimmt. Dadurch können die in den jeweiligen Bereichen des Reifens zur Verfügung stehenden Materialdicken optimal ausgenutzt werden, und dennoch eine ausreichende aerodynamische Optimierung über einen großen Bereich des Reifens erfolgen.

Vorzugsweise ist weiterhin vorgesehen, dass sich innerhalb eines Flächenbandes gleichmäßig wiederholend bzw. periodisch mindestens zwei als Erhebungen ausgeführte Aeroelemente und/oder mindestens drei als Vertiefungen ausgeführte Aeroelemente in die Umfangsrichtung und/oder quer zu der Umfangsrichtung benachbart zueinander liegen,
wobei unmittelbar nebeneinanderliegende Erhebungen unterschiedliche Aeroelement-Höhen und unmittelbar nebeneinanderliegende Vertiefungen unterschiedliche Aeroelement-Tiefen aufweisen, so dass sich innerhalb der mindestens zwei Erhebungen oder innerhalb der mindestens drei Vertiefungen Taschen ausbilden. Durch diese taschenartige Ausbildung lassen sich punktuell in periodischen Abständen zusätzliche Verwirbelungen in einfacher Weise erzeugen, um die aerodynamischen Eigenschaften zu verbessern.

Vorzugsweise ist weiterhin vorgesehen, dass der zweite Flankenwinkel der Verwirbelungs-Flanke über die Ausdehnung des jeweiligen Aeroelementes variiert, insbesondere mit zunehmendem Abstand vom Reifenzenit abnimmt, so dass sich ein im Wesentlichen gekrümmter Verlauf des jeweiligen Aeroelements ergibt, wobei der zweite Flankenwinkel außerhalb der Laufstreifenmitte auch dann zwischen 30° und 85°, vorzugsweise zwischen 30° und 60°, insbesondere zwischen 40° und 50°, liegt. Es ist also kein fester zweiter Flankenwinkel vorgesehen, sondern ein über die Reifenposition veränderlicher Winkel, um beispielsweise die unterschiedlichen Durchmesser von Reifenzenit bis zur Seitenwand oder zum Kernbereich auszugleichen und im dynamischen Zustand eine horizontal "gerade" Verwirbelungs-Flanke (an einer Erhebung oder einer Vertiefung) zu erhalten, was weitere aerodynamische Vorteile bringt.

Vorzugsweise ist weiterhin vorgesehen, dass die Aeroelemente eine Querschnittsform aufweisen, die ausgewählt ist aus der Gruppe bestehend aus: Rautenform, Schuppenform, Quadratform, Rechteckform, Tropfenform, Ellipsenform, Kreisform, wobei die Querschnittsform des jeweiligen Aeroelementes vorzugsweise gegenüber der Umfangsrichtung verdreht ist, um die Verwirbelungs-Flanke in dem zweiten Flankenwinkel zu der Umfangsrichtung auszurichten. Es sind also eine Reihe von unterschiedlichen Formen der Erhebungen oder Vertiefungen möglich, um je nach Auslegung und Anwendung des Reifens unterschiedliche aerodynamische Vorteile erzielen zu können und auch die sonstigen gewünschten Reifeneigenschaften zu berücksichtigen.

Vorzugsweise ist weiterhin vorgesehen, dass die in axialer Richtung beidseitig des Reifenzenits symmetrisch zueinander liegenden Flächenbänder in Umfangsrichtung gegeneinander versetzt bzw. verdreht am Reifen angeordnet sind. Auf diese Weise können weitere Reifeneigenschaften bei der Ausbildung der Aeroelemente berücksichtigt werden, wobei die Symmetrie der Flächenbänder an sich zum Reifenzenit erhalten bleibt, um die aerodynamischen Effekte auf beiden Seiten des Reifenzenits in identischer Weise umzusetzen. Die Teilung der jeweiligen gleichmäßig und sich wiederholend angeordneten Aeroelemente innerhalb der Flächenbänder bleibt also bei einer derartigen Variante erhalten.

Vorzugsweise ist weiterhin vorgesehen, dass innerhalb mindestens eines der in Umfangsrichtung verlaufenden Flächenbänder, in denen die Aeroelemente angeordnet sind, mindestens eine Indikatoreinheit angeordnet ist, die nicht in der Laufstreifenmitte angeordnet ist, d.h. stattdessen in der Laufstreifenschulter und/oder in den Seitenwänden und/oder in den Wulstbereichen, zum Angeben einer Abnutzung der Aeroelemente in dem jeweiligen Flächenband. Es wird also ein Indikator zum Anzeigen der Abnutzung der Aeroelemente bereitgestellt, der sich von einem Laufflächen-Abnutzungs-Indikator (Tread-Wear-Indicator) unterscheidet. Die Indikatoreinheit zeigt nämlich durch die Anordnung außerhalb der Laufstreifenmitte gerade nicht die Abnutzung des Laufstreifens an, sondern explizit die Abnutzung der Aeroelemente, da sich die Indikatoreinheit innerhalb der jeweiligen Flächenbänder außerhalb der Laufstreifenmitte befindet.

**In** den Zeichnungen zeigen:
- Fig. 1: eine Schnittansicht einer Radanordnung;
- Fig. 2: eine Draufsicht auf einen Reifen der Radanordnung gemäß Fig. 1 mit auf dem Umfang verteilten als Erhebungen und Vertiefungen ausgeführten Aeroelementen gemäß einer Ausführungsform;
- Fig. 2A, 2B: Schnittansichten eines als Vertiefung ausgeführten Aeroelementes;
- Fig. 2C: eine Schnittansicht von als Erhebung ausgeführten Aeroelementen;
- Fig. 3A: eine Draufsicht auf einen Reifen mit lediglich als Vertiefung ausgeführten Aeroelementen;
- Fig. 3B: eine schematische Ansicht eines als Vertiefung ausgeführten Aeroelements;
- Fig. 4A: eine Draufsicht auf einen Reifen mit lediglich als rautenförmige Erhebungen ausgeführten Aeroelementen;
- Fig. 4B: eine Schnittansicht durch taschenförmig angeordnete Erhebungen;
- Fig. 4C: eine Draufsicht auf einen Reifen mit auf dem Umfang verteilten als Erhebungen und Vertiefungen ausgeführten Aeroelementen gemäß einer weiteren Ausführungsform
- Fig. 5A, 5B: eine Draufsicht und eine Schnittansicht auf Aeroelemente als Erhebungen mit einer Quadratform;
- Fig. 5C: eine Draufsicht auf Aeroelemente als Erhebungen mit einer Dreieckform;
- Fig. 5D: Schnittansichten sowie eine ausschnittsweise Draufsicht auf Aeroelemente als Erhebungen mit einer Schuppenform;
- Fig. 5E: Schnittansichten sowie eine ausschnittsweise Draufsicht auf Aeroelemente als Erhebungen mit einer Tropfenform;
- Fig. 5F: Schnittansichten sowie eine ausschnittsweise Draufsicht auf Aeroelemente als Erhebungen mit einer Ellipsensegmentform;
- Fig. 6A: eine Schnittansicht durch eine Indikatoreinheit aus Fig. 3A; und
- Fig. 6B: eine weitere Ausführungsform einer Indikatoreinheit benachbart oder an einem als Erhebung ausgeführten Aeroelement.

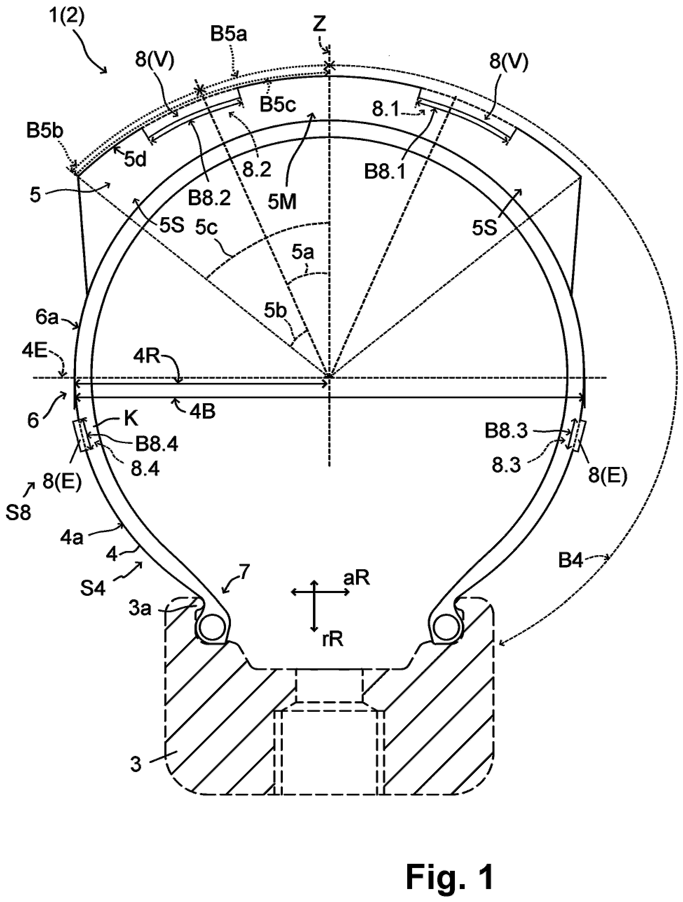

Figur 1 zeigt in einer Schnittansicht eine Radanordnung 1, insbesondere ein Laufrad eines Fahrrades 2, vorzugsweise eines Rennrades, die eine Felge 3 und einen darauf aufgezogenen Reifen 4 aufweist. Der Reifen 4 weist ringförmig umlaufend einen Laufstreifen 5 auf, der in radialer Richtung rR oberhalb einer ringförmig umlaufenden Karkasslage K mit Festigkeitsträgern (nicht dargestellt) angeordnet ist. Die Karkasslage K verläuft radial unterhalb des Laufstreifens 5 in axialer Richtung aR zu beiden Seiten eines Reifenzenits Z über Seitenwände 6 und in radialer Richtung rR bis in Wulstbereiche 7 des Reifens 4, die durch ringförmig umlaufende Wulstkerne verstärkt sind, wobei die Karkasslage K die Wulstkerne in der Regel umschlingt. Über die Wulstbereiche 7 wird der Reifen 4 auf Felgenhörnern 3a der Felge 3 aufgespannt und gehalten. Im Schnitt weist ein solcher Reifen 4 mit den beschriebenen Reifen-Komponenten in der Regel einen in etwa runden oder ovalen Verlauf auf.

Der Laufstreifen 5 ist dabei unterteilt in eine Laufstreifenmitte 5M und in axialer Richtung aR rechts- und linksseitig in symmetrischer Anordnung in zwei Laufstreifenschultern 5S. Die Laufstreifenmitte 5M ist dabei derjenige ringförmig umlaufende Bereich des Laufstreifens 5, durch den zentral der Reifenzenit Z verläuft und mit dem der aufgepumpte Reifen 4 in seinem Betrieb auf einer beliebigen Oberfläche (Straße, Schotter, etc.) aufliegt und in Umfangsrichtung uR darauf abrollt. Die Laufstreifenmitte 5M überdeckt zu beiden Seiten des Reifenzenits Z hin jeweils einen ersten Winkelbereich 5a von ausführungs- und anwendungsbedingt in der Regel zwischen 10° und 35°. Die sich daran anschließenden Laufstreifenschultern 5S überdecken jeweils einen zweiten Winkelbereich 5b von zwischen 10° und 50°. Der Laufstreifen 5 überdeckt damit im Querschnitt rechts- und linksseitig des Reifenzenits Z jeweils einen Gesamt-Winkelbereich 5c (=5a+5b) von insgesamt zwischen 20 und 85°, bevorzugt von zwischen 30 und 75°, besonders bevorzugt von zwischen 50 und 60°.

Die Ausdehnung des Laufstreifens 5 mit der Laufstreifenmitte 5M und den beiden Laufstreifenschultern 5S auf der jeweiligen Seite des Reifenzenits Z kann auch durch eine äußere Gesamt-Laufstreifen-Bogenlänge B5c beschrieben werden. Die äußere Gesamt-Laufstreifen-Bogenlänge B5c gibt dabei die Querschnittslänge einer Außenfläche 5d des Laufstreifens 5 auf der jeweiligen Seite des Reifenzenits Z an. Diese Gesamt-Laufstreifen-Bogenlänge B5c unterteilt sich in eine erste Laufstreifen-Bogenlänge B5a, die die Querschnittslänge der Außenfläche 5d im Bereich der Laufstreifenmitte 5M auf der jeweiligen Seite des Reifenzenits Z angibt, und in eine zweite Laufstreifen-Bogenlänge B5b, die die Querschnittslänge der Außenfläche 5d im Bereich der Reifenschulter 5S auf der jeweiligen Seite des Reifenzenits Z angibt, wobei B5c = B5a + B5b.

Der Laufstreifen 5 weist auf der jeweiligen Seite des Reifenzenits Z eine Gesamt-Laufstreifen-Bogenlänge B5c auf, die vorzugsweise zwischen 105% und 130% eines nominellen Reifenradius 4R entspricht, der in einem Reifen-Äquator 4E gemessen wird, bzw. entspricht das Doppelte dieser Gesamt-Laufstreifen-Bogenlänge B5c, die für die jeweilige Seite des Reifenzenits Z angegeben wird, vorzugsweise zwischen 105% und 130% einer nominellen Reifenbreite 4B im Reifen-Äquator 4E. Dadurch lässt sich der Laufstreifen 5 von der sich daran anschließenden Seitenwand 6 des Reifens 4 abgrenzen, wobei die Außenseite 5d des Laufstreifens 5 ab zwischen 105% und 130% des nominellen Reifenradius 4R bzw. der nominellen Reifenbreite 4B über eine abfallende Flanke in eine Außenseite 6a der Seitenwand 6 übergeht.

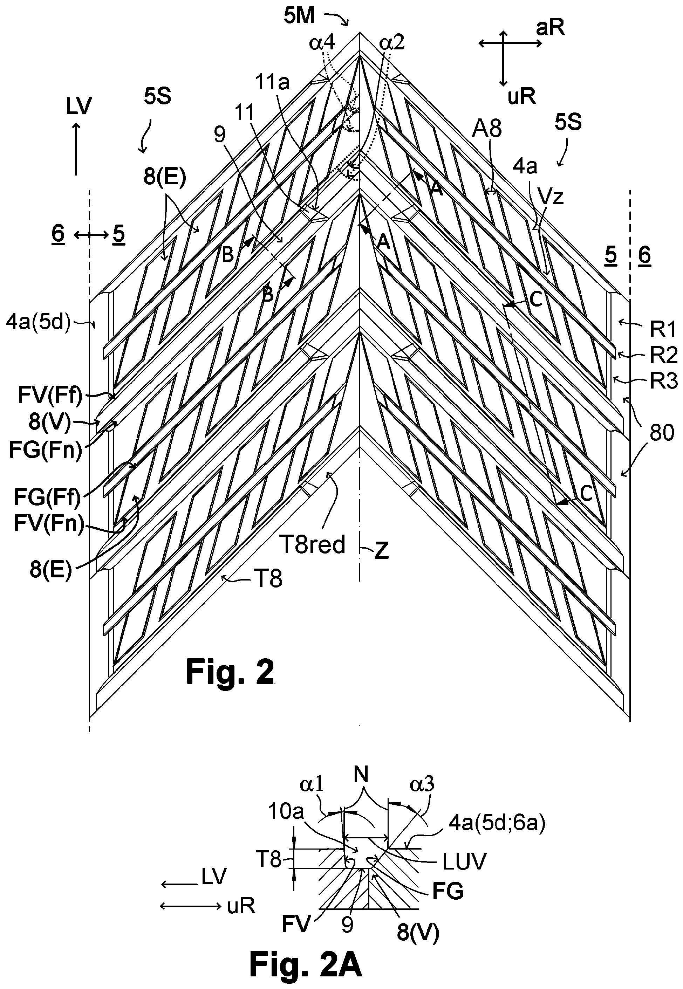

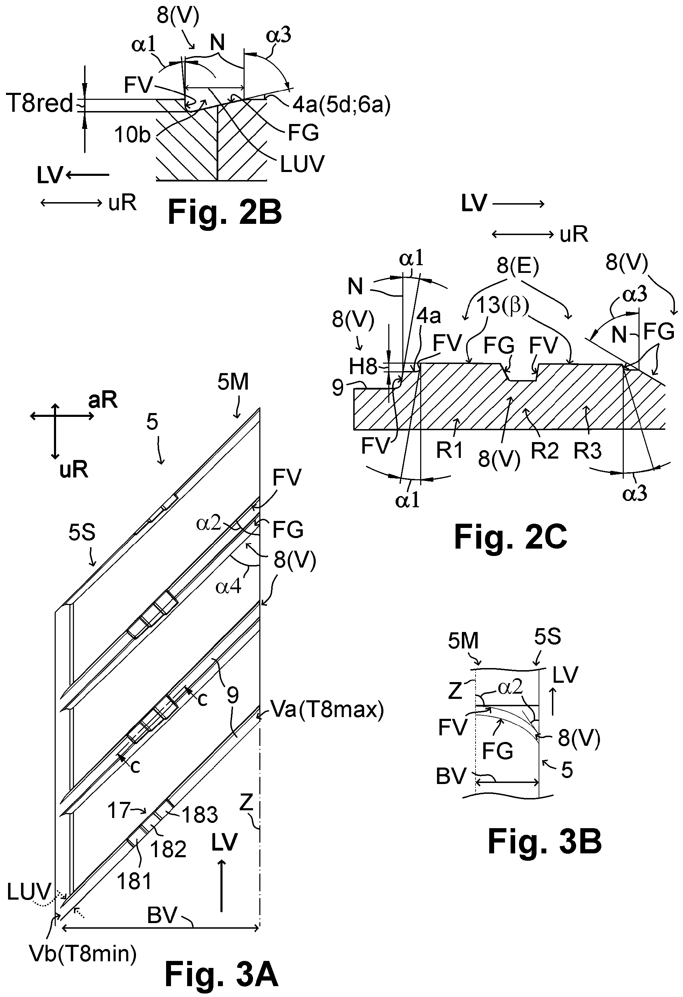

Gemäß Fig. 1 und der Draufsicht in Fig. 2 ist vorgesehen, dass sowohl im Bereich der Laufstreifenmitte 5M als auch im Bereich der Laufstreifenschultern 5S gleichmäßig über den Umfang verteilt mehrere Aeroelemente 8 angeordnet sind, die als Erhebungen E oder als Vertiefungen V ausgebildet sein können. Aeroelemente 8 sind gemäß der Erfindung Elemente oder Bereiche im Reifen 4, die jeweils eine Verwirbelungs-Flanke FV aufweisen, die sowohl angewinkelt zu einer Oberfläche 4a des Reifens 4, in Fig. 2 die Außenseite 5d des Laufstreifens 5, als auch angewinkelt zu der Umfangsrichtung uR verläuft. Darunter ist zu verstehen, dass die Verwirbelungs-Flanke FV, wie in Fig. 2A beispielhaft dargestellt, unter einem ersten Flankenwinkel α1 von zwischen 0° und 45°, insbesondere von zwischen 5° und 20°, zu einer Normalen N verläuft, die benachbart zu der Verwirbelungs-Flanke FV senkrecht von der Oberfläche 4a des Reifens 4 (Außenseite 5d des Laufstreifens 5) absteht. Verläuft das jeweilige Aeroelement 8 ergänzend zum Laufstreifen 5 oder statt im Laufstreifen 5 in der Seitenwand 6 des Reifens 4, wie in Fig. 1 angedeutet, so verläuft die Verwirbelungs-Flanke FV in entsprechender Weise unter dem ersten Flankenwinkel α1 zu einer Normalen N auf der Außenseite 6a der Seitenwand 6, die in dem Bereich der Seitenwand 6 die Oberfläche 4a des Reifens 4 bildet.

Ferner verläuft die Verwirbelungs-Flanke FV unter einem zweiten Flankenwinkel α2 (s. Fig. 2) zur Umfangsrichtung uR bzw. zum Reifenzenit Z, wobei der zweite Flankenwinkel α2 zwischen 30° und 90°, vorzugsweise zwischen 30° und 60°, insbesondere zwischen 40° und 50° beträgt. Wie später noch erläutert, kann der zweite Flankenwinkel α2 innerhalb eines Aeroelements 8 auch variieren, d.h. das jeweilige Aeroelement 8 verläuft nicht geradlinig.

Über eine derartig steil angewinkelte Verwirbelungs-Flanke FV wird Luft, die während einer Drehung des Reifens 4 in eine festgelegte Vorwärtslaufrichtung LV bzw. bei einer Vorwärtsfahrt entlang der Oberfläche 4a des Reifens 4 (entgegen der Vorwärtslaufrichtung LV) strömt, oberflächennah abgelenkt, wobei die anströmende Luft über die steile Verwirbelungs-Flanke FV des Aeroelements 8 abrupt absinkt oder abfällt, wodurch gleichzeitig auch eine oberflächennahe Verwirbelung entsteht. Da die Aeroelemente 8 gleichmäßig über den Umfang des Reifens 4 verteilt sind, kann bei entsprechend hohen Rotations-Geschwindigkeiten des Reifens 4 von beispielsweise 35km/h und mehr durch die über den Umfang auftretenden oberflächennahen Verwirbelungen eine laminare Strömung um den Reifen 4 erzeugt werden. Durch diese laminare Strömung können die aerodynamischen Eigenschaften des Reifens 4 verbessert werden.

Um eine solche steile Verwirbelungs-Flanke FV in dem Reifen 4 zu erzeugen, kann das jeweilige Aeroelement 8
- durch eine Vertiefung V gebildet werden, d.h. die Verwirbelungs-Flanke FV verläuft mit dem ersten Flankenwinkel α1 gegenüber der Normalen N von der Oberfläche 4a des Reifens 4 ausgehend in den Reifen 4 hinein (s. z.B. Fig. 2A, 2B, 3A, 3B), oder
- durch eine Erhebung E gebildet werden, d.h. die Verwirbelungs-Flanke FV steht mit dem ersten Flankenwinkel α1 gegenüber der Normalen N von der Oberfläche 4a des Reifens 4 ab (s. z.B. Fig. 2C). Eine Erhebung E und eine Vertiefung V oder Erhebungen E unterschiedlicher Höhe können dabei auch ineinander übergehen bzw. aneinander angrenzen, wie noch näher erläutert.

Um sowohl bei einer Erhebung E als auch bei einer Vertiefung V die anströmende Luft bei einer Drehung des Reifens 4 in die Vorwärtslaufrichtung LV bzw. bei einer Vorwärtsfahrt zu verwirbeln, ist die Verwirbelungs-Flanke FV
- bei der Ausbildung des jeweiligen Aeroelements 8 als eine Vertiefung V eine führende Flanke Ff des jeweiligen Aeroelements 8, und
- bei der Ausbildung des jeweiligen Aeroelements 8 als Erhebung E eine nachlaufende Flanke Fn des jeweiligen Aeroelements 8.

"Führend" und "nachlaufend" bezieht sich dabei auf die Umfangsrichtung uR des Reifens 4 in der Vorwärtslaufrichtung LV und gibt daher an, welche der zur Umfangsrichtung uR angewinkelt verlaufenden Flanken Ff, Fn des Aeroelements 8 sich vorausbewegt, die führende Flanke Ff, bzw. sich hinterherbewegt, die nachlaufende Flanke Fn. Neben der Verwirbelungs-Flanke FV kann das jeweilige Aeroelement 8 unterschiedliche konstruktive Ausgestaltungen aufweisen:

Ist das Aeroelement 8 eine Vertiefung V, so kann die Verwirbelungs-Flanke FV in Umfangsrichtung uR (entgegen der Vorwärtslaufrichtung LV) zunächst in eine Grundfläche 9, die einen Grund der Vertiefung V bildet, übergehen, wobei die Grundfläche 9 in etwa parallel zur Oberfläche 4a des Reifens 4 verläuft. Dies ist beispielhaft in Fig. 2A in einer Schnittansicht für eine der rillenartigen Vertiefungen V (Schnitt B-B) aus Fig. 2 dargestellt. Die Grundfläche 9 geht anschließend in Umfangsrichtung uR (entgegen der Vorwärtslaufrichtung LV) in eine Gegenflanke FG über, die bis zur Oberfläche 4a des Reifens 4 verläuft. Demnach wird durch die Gegenflanke FG, die Grundfläche 9 und die Verwirbelungs-Flanke FV ein erster Zwischenraum 10a definiert, der in Umfangsrichtung uR bzw. zwischen der Gegenflanke FG und der Verwirbelungs-Flanke FV über eine bestimmte Vertiefungs-Umfangslänge LUV verläuft. Diese Vertiefungs-Umfangslänge LUV kann beispielsweise zwischen 5mm und 15mm, vorzugsweise 10mm, betragen.

Die Gegenflanke FG verläuft in bevorzugten Ausführungsformen flacher als die Verwirbelungs-Flanke FV und weist einen dritten Flankenwinkel α3 gegenüber der Normalen N, die benachbart zu der Gegenflanke FG senkrecht von der Oberfläche 4a des Reifens 4 absteht, von vorzugsweise zwischen 10° und 75°, insbesondere von zwischen 40° und 70° auf, wobei vorzugsweise gilt α3>α1. Eine solche nicht zu stark angewinkelte Gegenflanke FG kann beispielsweise bewirken, dass die bereits verwirbelte Luft bei einer Vorwärtsfahrt sanft an die Oberfläche 4a geleitet wird. Zudem können sich in dem Aeroelement 8 gefangene Steine leichter wieder lösen. Grundsätzlich kann zumindest bei einigen Aeroelementen 8 je nach Anwendungsfokus auch ein dritter Flankenwinkel α3 von bis zu 0° vorgesehen sein, so dass die Gegenflanke FG senkrecht zur Oberfläche 4a ausgerichtet ist.

Gemäß der Schnittansicht in Fig. 2B (Schnitt A-A aus Fig. 2) kann für ein als Vertiefung V ausgebildetes Aeroelement 8 alternativ eine Ausführung vorgesehen sein, bei der die Verwirbelungs-Flanke FV in Umfangsrichtung uR (entgegen der Vorwärtslaufrichtung LV) unmittelbar in die Gegenflanke FG übergeht, deren dritter Flankenwinkel α3 gegenüber der Normalen N dann noch größer ausfällt als bei einer Variante mit vorhandener Grundfläche 9 (s. Fig. 2A), d.h. α3>>α1. Da die Grundfläche 9 entfällt, kann die Gegenflanke FG bei gleicher Vertiefungs-Umfangslänge LUV wie in der Ausführung gemäß Fig. 2A einen entsprechend flacheren Anstieg aufweisen.

Ein diese Vertiefung V mit ausbildender zweiter Zwischenraum 10b wird in diesem Bereich des Aeroelements 8 entsprechend lediglich durch die Gegenflanke FG und die Verwirbelungs-Flanke FV definiert. Der zweite Zwischenraum 10b verläuft dabei im Schnitt im Wesentlichen dreieckförmig (ggf. mit abgerundeten Kanten) während der erste Zwischenraum 10a wie in Fig. 2A dargestellt im Schnitt trapezförmig (ggf. mit abgerundeten Kanten) verläuft. Ein dreieckiger Verlauf der Vertiefung V kann beispielsweise in der Laufstreifenmitte 5M des Laufstreifens 5 vorliegen, während ein trapezförmiger oder vergleichbarer Verlauf bevorzugt zumindest in den Laufstreifenschultern 4S und/oder auch in der Seitenwand 6 vorliegt.

Wie in Fig. 3A dargestellt, verläuft das jeweilige als rillenartige Vertiefung V ausgebildete Aeroelement 8 ohne Unterbrechungen zwischen einem ersten Ende Va und einem zweiten Ende Vb mit zumindest einem dieser Schnittverläufe aus Fig. 2A oder Fig. 2B, wobei die Verwirbelungs-Flanke FV unter dem zweiten Flankenwinkel α2 zur Umfangsrichtung uR angewinkelt ist und die Gegenflanke FG mit einem vierten Flankenwinkel α4. Demnach verlaufen zumindest die Gegenflanke FG und die Verwirbelungs-Flanke FV und ggf. auch die Grundfläche 9 durchgehend zwischen dem ersten Ende Va und dem zweiten Ende Vb der Vertiefung V, so dass sich eine rillenartige oder kanalartige Vertiefung V ausbildet. Eine Vertiefungs-Bogenlänge BV (Ausdehnung der Vertiefung V senkrecht zur Umfangsrichtung uR) zwischen den beiden Enden Va, Vb der Vertiefung V kann je nach Ausführung und Konstruktion des Reifens 4 wie folgt variieren:
So kann das erste Ende Va der Vertiefung V beispielsweise in der Laufstreifenmitte 5M des Laufstreifens 5, wie in Fig. 2 und 3A dargestellt im Reifenzenit Z, liegen und das zweite Ende Vb der Vertiefung V in der Laufstreifenschulter 5S des Laufstreifens 5. In nicht dargestellten Ausführungsformen kann das zweite Ende Vb der Vertiefung V aber auch in der Seitenwand 6 oder in dem Wulstbereich 7 liegen. Gemäß weiterer nicht dargestellter Ausführungsformen kann das erste Ende Va der Vertiefung V zwar in der Laufstreifenmitte 5M aber beabstandet zu dem Reifenzenit Z liegen und das zweite Ende Vb der Vertiefung V in der Laufstreifenschulter 5S oder an der Seitenwand 6 oder in dem Wulstbereich 7. Ferner kann das erste Ende Va der Vertiefung V in der Laufstreifenschulter 5S und das zweite Ende Vb der Vertiefung V ebenfalls in der Laufstreifenschulter 5S oder an der Seitenwand 6 oder in dem Wulstbereich 7 liegen. Weiterhin kann das erste Ende Va der Vertiefung V an der Seitenwand 6 und das zweite Ende Vb der Vertiefung V ebenfalls an der Seitenwand 6 oder in dem Wulstbereich 7 liegen.

Die Vertiefungs-Bogenlänge BV ergibt sich dann in den jeweiligen Ausführungen aus der Längs-Ausdehnung der jeweiligen Vertiefung V (in deren Ausdehnungsrichtung) und dem zweiten und vierten Flankenwinkel α2, α4. Die rillenartige oder kanalartige Vertiefung V verläuft dann vorzugsweise ohne Unterbrechungen über diese Vertiefungs-Bogenlänge BV zwischen den beiden Enden Va, Vb. Diese beschriebenen Ausführungen sind vorzugsweise für sämtliche Arten von Vertiefungen V vorgesehen, wobei dies auch auf die Lage und den Verlauf von Aeroelementen 8 als Erhebungen E übertragen werden kann, wie später noch erläutert.

Demnach ist insgesamt ein variabler Verlauf der als kanalartige Vertiefung V ausgeführten Aeroelemente 8 möglich, wobei die Aeroelemente 8 wie in Fig. 1 beispielhaft dargestellt beidseitig des Reifenzenits Z innerhalb von festgelegten Flächenbändern 8.i, i = 1, 2,.. verlaufen, wobei die jeweiligen Flächenbänder 8.i in Umfangsrichtung uR vollständig um den Reifen 4 umlaufen. Ein erstes Flächenband 8.1, wie beispielhaft dargestellt in axialer Richtung aR rechtsseitig des Reifenzenits Z, und ein zweites Flächenband 8.2, wie beispielhaft dargestellt in axialer Richtung aR linksseitig des Reifenzenits Z, verlaufen dabei symmetrisch zum Reifenzenit Z. In einem weiteren dritten Flächenband 8.3 und einem in axialer Richtung aR gegenüberliegenden vierten Flächenband 8.4 verlaufen zudem als Erhebungen E ausgeführte Aeroelemente 8 auf den Seitenwänden 6.

Demnach sind immer jeweils zwei der Flächenbänder 8.i mit derselben Art von Aeroelementen 8 (Erhebungen E und/oder Vertiefungen V) symmetrisch zum Reifenzenit Z angeordnet, wobei die Aeroelemente 8.i innerhalb der symmetrisch angeordneten Flächenbänder 8.i mit derselben Teilung aber in Umfangsrichtung uR versetzt zueinander verlaufen können. Weiterhin ist vorgesehen, dass je Reifenseite vorzugsweise lediglich ein Flächenband 8.i mit derselben Art und Anordnung von Aeroelementen 8, maximal jedoch zwei senkrecht zur Umfangsrichtung benachbarte Flächenbänder 8.i mit jeweils derselben Art und Anordnung von Aeroelementen 8, verlaufen.

Jedes Flächenband 8.i weist eine Flächenband-Bogenlänge B8.i auf, die durch die Längs-Ausdehnung der kanalartigen Vertiefungen V innerhalb des jeweiligen Flächenbandes 8.i bzw. durch die Längs-Ausdehnung der jeweiligen Erhebungen E innerhalb des jeweiligen Flächenbandes 8.i auf der jeweiligen Seite des Reifenzenits Z bestimmt wird. Demnach können die Flächenbänder 8.i mit den jeweiligen Aeroelementen 8 (V; E) je nach Ausführung unterbrechungsfrei in dem Laufstreifen 5 und/oder in den Seitenwänden 6 und/oder in den Wulstbereichen 7 des Reifens 4 verlaufen. Je nach Ausführung ergibt sich also eine Flächenband-Bogenlänge B8.i des jeweiligen Flächenbandes 8.i von zwischen 100% und 0.1% einer Reifen-Bogenlänge B4, die im Querschnitt des Reifens 4 entlang seiner Oberfläche 4a zwischen dem Reifenzenit Z und dem jeweiligen Wulstbereich 7 gemessen wird.

Verlaufen die Vertiefungen V auf der jeweiligen Seite des Reifenzenits Z innerhalb eines Flächenbandes 8.i senkrecht zur Umfangsrichtung uR versetzt zueinander, definieren die jeweils am äußersten bzw. am innersten liegenden Enden Va, Vb das jeweilige Flächenband 8.i und daher dessen Flächenband-Bogenlänge B8.i. Sind die Vertiefungen V jedoch in Umfangsrichtung uR gleichverteilt und unversetzt innerhalb eines solchen Flächenbandes 8.i angeordnet, wie beispielsweise in Fig. 3A, so ist die Flächenband-Bogenlänge B8.i identisch mit der Vertiefungs-Bogenlänge BV.

Wie bereits beschrieben, verläuft die Verwirbelungs-Flanke FV unter dem zweiten Flankenwinkel α2 zur Umfangsrichtung uR (vgl. Fig. 2 und Fig. 3A). Die Verwirbelungs-Flanke FV kann dabei beispielsweise geradlinig verlaufen, wie dargestellt, d.h. der zweite Flankenwinkel α2 bleibt innerhalb der jeweiligen Vertiefung V über die gesamte Vertiefungs-Bogenlänge BV konstant, oder aber gekrümmt bzw. gebogen verlaufen, d.h. der zweite Flankenwinkel α2 variiert über die Vertiefungs-Bogenlänge BV. Dazu kann der zweite Flankenwinkel α2 beispielsweise mit größer werdendem Abstand zum Reifenzenit Z geringer werden, beispielsweise ausgehend von zwischen 90° und 60°, insbesondere 75°, im oder benachbart zum Reifenzenit Z am ersten Ende Va der Vertiefung V bis hin zu einem zweiten Flankenwinkel α2 von beispielsweise 30°, vorzugsweise 45°, in der Laufstreifenschulter 5S oder in der Seitenwand 6 oder im Wulstbereich 7 bzw. am zweiten Ende Vb der Vertiefung V, wie schematisch in Fig. 3B dargestellt.

Dadurch können beispielsweise die unterschiedlichen Durchmesser des Reifens 4 zwischen dem ersten Ende Va und dem zweiten Ende Vb über die Vertiefungs-Bogenlänge BV ausgeglichen werden und im dynamischen Zustand eine horizontal in etwa "gerade" Vertiefung V erreicht werden, wodurch sich weitere aerodynamische Vorteile ergeben können. Weiterhin ist vorgesehen, dass der zweite Flankenwinkel α2 außerhalb der Laufstreifenmitte 5M zwischen 30° und 85°, vorzugsweise zwischen 30° und 60°, insbesondere zwischen 40° und 50°, liegt. Damit unterscheidet sich die Anordnung der Aeroelemente 8 von der Anordnung einer herkömmlichen Profilierung, die außerhalb der Laufstreifenmitte 5M zum Optimieren des Grips bei einer Kurvenfahrt in der Regel Winkel der Profilkanten von zwischen 10° und 20° zur Umfangsrichtung uR aufweisen. Die in der vorliegenden Erfindung genutzten größeren Winkel haben demgegenüber außerhalb der Laufstreifenmitte 5M einen besonderen aerodynamischen Nutzen und werden daher zur aerodynamischen Optimierung verwendet.

Das jeweilige Aeroelement 8, wenn es als Vertiefung V ausgeführt ist, kann eine Aeroelement-Tiefe T8 (ausgehend von der Oberfläche 4a des Reifens 4) aufweisen, die nicht nur in Umfangsrichtung uR über die Vertiefungs-Umfangslänge LUV variiert (vgl. angewinkelte Flanken FG, FV), sondern auch zwischen den beiden Enden Va, Vb über die Vertiefungs-Bogenlänge BV variiert. Diese Variation der Aeroelement-Tiefe T8 über die Vertiefungs-Bogenlänge BV kann beispielsweise dadurch erreicht werden, dass sich die Aeroelement-Tiefe T8 oberhalb der Grundfläche 9 über die Vertiefungs-Bogenlänge BV verändert, d.h. auch die Gegenflanke FG und/oder die Verwirbelungs-Flanke FV ändern ihre Höhe (bzw. Tiefe) über die Vertiefungs-Bogenlänge BV.

Eine derartige Tiefen-Variation über die Vertiefungs-Bogenlänge BV kann beispielsweise derartig vorgesehen sein, dass das als Vertiefung V ausgebildete Aeroelement 8, wenn es sich bis zu dem Reifenzenit Z oder zumindest bis in den Laufstreifen 5 erstreckt, an dem ersten Ende Va, das näher am Reifenzenit Z liegt, eine größere (tiefere) Aeroelement-Tiefe T8 aufweist als an dem zweiten Ende Vb, das sich weiter weg vom Reifenzenit Z befindet. Dies ist insbesondere bei einer Ausdehnung der Vertiefung V bis in die Seitenwand 6 und ggf. bis hin zu den Wulstbereichen 7 sinnvoll, da im Laufstreifen 5 in der Tiefenrichtung in der Regel mehr Material für eine Vertiefung V zur Verfügung steht als in der Seitenwand 6 und in den Wulstbereichen 7, wie auch in Fig. 1 ersichtlich.

Vorzugsweise kann vorgesehen sein, dass die Aeroelement-Tiefe T8 je nach Reifenkonstruktion, insbesondere der nominellen Reifenbreite 4B, und je nach Anwendung einen Maximalwert T8Max von 8mm, vorzugsweise 3.5mm, insbesondere 2mm aufweist, beispielsweise in der Laufstreifenmitte 5M oder in der Laufstreifenschulter 5S. Ausgehend von diesem Maximalwert T8Max kann die Aeroelement-Tiefe T8 dann wie beschrieben zumindest über einen Teil der Vertiefungs-Bogenlänge BV bis zu einem Minimalwert T8Min von beispielsweise 0.1mm, insbesondere 0.5mm in der jeweiligen Seitenwand 6 oder dem jeweiligen Wulstbereich 7 abfallen. Weist der Laufstreifen 5 in der Laufstreifenschulter 5S mehr Material auf als in der Laufstreifenmitte 5M, wie auch in Fig. 1 dargestellt, kann die Aeroelement-Tiefe T8 stattdessen auch in der Laufstreifenschulter 5S den Maximalwert T8Max annehmen und ausgehend davon zur Laufstreifenmitte 5M und, falls dahin verlaufend, zur Seitenwand 6 hin abfallen.

Gemäß einer weiteren Ausführungsform ist vorgesehen, dass die Vertiefung V im Bereich der Laufstreifenmitte 5M, insofern sie bis dahin verläuft, eine reduzierte Aeroelement-Tiefe T8red aufweist, beispielsweise durch das gezielte Ausbilden des zweiten Zwischenraums 10b gemäß der Schnittansicht in Fig. 2B. Dabei werden die beiden unterschiedlichen Schnittverläufe in den Fig. 2A und 2B innerhalb derselben kanalartigen Vertiefung V miteinander kombiniert, wie auch in Fig. 2 dargestellt. Um den Höhenunterschied zwischen den beiden Zwischenräumen 10a, 10b zu kompensieren, ist eine Übergangsflanke 11 vorgesehen, die ausgehend von der Grundfläche 9 zwischen der Gegenflanke FG und der Verwirbelungs-Flanke FV des ersten Zwischenraumes 10a in etwa senkrecht oder leicht angewinkelt zur Grundfläche 9 nach oben bzw. außen verläuft. Die Übergangsflanke 11 geht an einer Oberkante 11a in die Gegenflanke FG des zweiten Zwischenraums 10b über bzw. schließt mit dieser ab.

Durch diese reduzierte Aeroelement-Tiefe T8red im Bereich des Reifenzenits Z bzw. der Laufstreifenmitte 5M steht in diesem Bereich mehr Gummimaterial zur Verfügung, wodurch die Abriebeigenschaften, die Lebensdauer sowie auch die Geräuschentwicklung optimiert werden. Ausgehend von der Übergangsflanke 11 in axialer Richtung aR nach außen kann die Aeroelement-Tiefe T8 dann konstant bleiben oder aber sich wie oben beschrieben verändern. Grundsätzlich ist jedoch auch eine konstante Aeroelement-Tiefe T8 über die gesamte Vertiefungs-Bogenlänge BV der Vertiefung V oder zumindest einen Teil der Vertiefungs-Bogenlänge BV möglich.

Ist das Aeroelement 8 eine Erhebung E, wie in Fig. 2C in einer Schnittansicht (Schnitt C-C aus Fig. 2) dargestellt, so geht die mit dem ersten Flankenwinkel α1 von der Oberfläche 4a in dem Fall abstehende Verwirbelungs-Flanke FV in Umfangsrichtung uR (bei einer Erhebung E in die Vorwärtslaufrichtung LV) zunächst in eine Deckfläche 13, die die Erhebung E nach oben hin in einer bestimmten Aeroelement-Höhe H8 bedeckt, über. Die Deckfläche 13 verläuft vorzugsweise mit einem Flächenwinkel β leicht angewinkelt zur Oberfläche 4a des Reifens 4, um die aerodynamischen Eigenschaften des Reifens 4 zu verbessern. Der Flächenwinkel β liegt beispielsweise zwischen 70° und 90° zur Normalen N auf der Oberfläche 4a des Reifens 4.

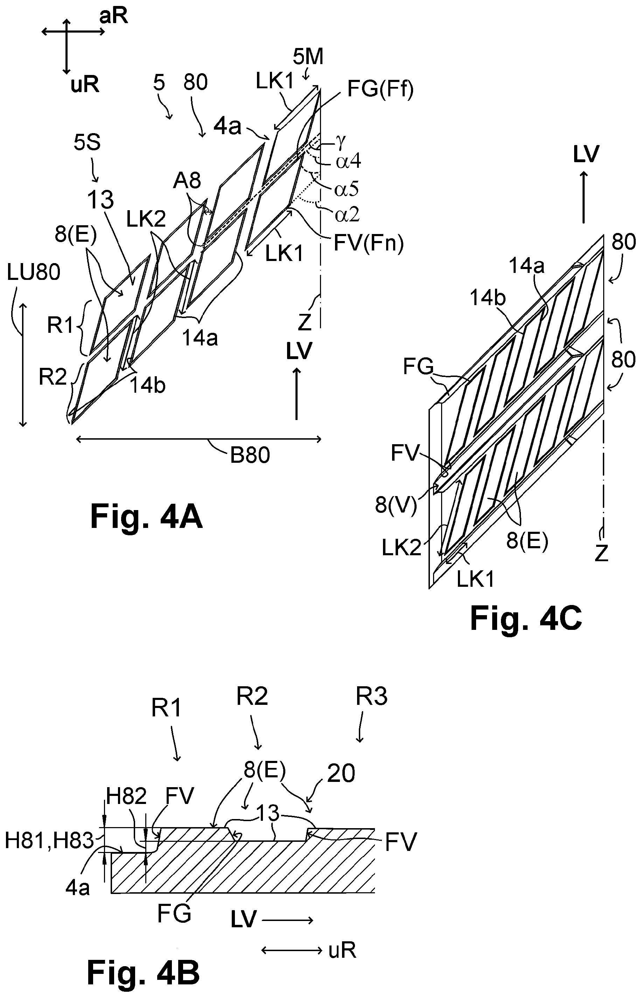

Wie in Fig. 2 und Fig. 4A in einer Draufsicht dargestellt, kann eine solche Erhebung E beispielsweise eine Deckfläche 13 in Rautenform aufweisen, so dass eine stollenartige Erhebung E mit der Verwirbelungs-Flanke FV als nachlaufende Flanke Fn und einer in Umfangsrichtung uR gegenüberliegenden Gegenflanke FG als führende Flanke Ff gebildet wird. Die Verwirbelungs-Flanke FV und die Gegenflanke FG weisen dabei eine identische erste Kantenlänge LK1 auf, die beispielsweise zwischen 0.5mm und 6mm, bevorzugt zwischen 1mm und 3mm, betragen kann.

Die Gegenflanke FG verläuft unter dem dritten Flankenwinkel α3 gegenüber der Normalen N auf der Oberfläche 4a des Reifens 4 zumindest bis zur Oberfläche 4a des Reifens 4, wie in Fig. 2C dargestellt. Der dritte Flankenwinkel α3 kann bei einer aerodynamischen Optimierung des Reifens 4 beispielsweise zwischen 10° und 75°, insbesondere zwischen 40° und 70°, betragen, wobei dann auch für die Erhebungen E vorzugsweise α3>α1 gilt. Soll der Reifen 4 zusätzlich auch auf Grip optimiert werden, kann zumindest für einige der als Erhebungen E ausgeführten Aeroelemente 8 ein dritter Flankenwinkel α3 von beispielsweise zwischen 0° und 45°, insbesondere zwischen 0° und 20°, gewählt werden, so dass diese auch als aktive Bremskante und ggf. Lenkkante wirkende Gegenflanke FG noch zu einer Bremswirkung bzw. zu einem verbesserten Grip bei Bremsung und ggf. Lenkung beitragen kann.

Für zumindest einige der als rautenförmige Erhebung E ausgeführten Aeroelemente 8, insbesondere für solche in der Laufstreifenmitte 5M, ist es auch möglich, dass die Erhebung E keine Deckfläche 13 aufweist, sondern die Verwirbelungs-Flanke FV unmittelbar in die dann sehr flach verlaufende Gegenflanke FG übergeht (vergleichbar zu der Ausführung der im Querschnitt etwa dreieckigen Vertiefung V gemäß Fig. 2B). In dem Fall verringert sich zwar der Grip, der durch dieses Aeroelement 8 bereitgestellt wird, allerdings ergibt sich eine zusätzliche Verbesserung der aerodynamischen Eigenschaften des Reifens 4.

Die Aeroelement-Höhe H8 beträgt bei dieser Ausführung der Erhebung E mit einer rautenförmigen Deckfläche 13 vorzugsweise zwischen 0.1mm und 8mm, vorzugsweise zwischen 1mm und 6.5mm, wobei die Aeroelement-Höhe H8 an der höheren Verwirbelungs-Flanke FV beispielsweise zwischen 1mm und 8mm, bevorzugt zwischen 2.5mm und 6.5mm, beträgt und an der niedrigeren Gegenflanke FG zwischen 0.1mm und 4mm, bevorzugt zwischen 1mm und 3.5mm. Die Aeroelement-Höhe H8 kann auch je nach Reifenkonstruktion, insbesondere einer nominellen Reifenbreite 4B, und der Anwendung variieren.

Die Verwirbelungs-Flanke FV verläuft unter dem zweiten Flankenwinkel α2 gegenüber der Umfangsrichtung uR und die Gegenflanke FG unter einem vierten Flankenwinkel α4 gegenüber der Umfangsrichtung uR, wobei die beiden Flankenwinkel α2, α4 in dieser Ausführung als Raute identisch sind und vorzugsweise zwischen 30° und 90°, vorzugsweise zwischen 30° und 60°, insbesondere zwischen 40° und 50° betragen. Auch bei dieser Ausführung mit als Erhebungen E ausgeführten Aeroelementen 8 ist vorzugsweise vorgesehen, dass der zweite Flankenwinkel α2 außerhalb der Laufstreifenmitte 5M zwischen 30° und 85°, vorzugsweise zwischen 30° und 60°, insbesondere zwischen 40° und 50°, liegt. Damit unterscheidet sich die Anordnung der Aeroelemente 8 von der Anordnung einer herkömmlichen Profilierung, die außerhalb der Laufstreifenmitte 5M zum Optimieren des Grips bei einer Kurvenfahrt in der Regel Winkel der Profilkanten von zwischen 10° und 20° zur Umfangsrichtung uR aufweisen. Die in der vorliegenden Erfindung genutzten größeren Winkel haben demgegenüber außerhalb der Laufstreifenmitte 5M einen besonderen aerodynamischen Nutzen und werden daher zur aerodynamischen Optimierung auch bei den Erhebungen E verwendet.

Zwischen der Verwirbelungs-Flanke FV und der Gegenflanke FG verlaufen parallel zueinander eine erste Seitenflanke 14a, die zum Reifenzenit Z weist, und eine zweite Seitenflanke 14b, die vom Reifenzenit Z weg weist. Die erste und zweite Seitenflanke 14a, 14b weisen jeweils eine identische zweite Kantenlänge LK2 auf, die beispielsweise zwischen 1mm und 10mm, vorzugsweise zwischen 2mm und 6mm, beträgt. Beide Seitenflanken 14a, 14b verlaufen unter einem fünften Flankenwinkel α5 von vorzugsweise maximal 30° gegenüber der Umfangsrichtung uR. Durch diese Anwinkelung kann die anströmende Luft zumindest teilweise entlang dieser Seitenflanken 14a, 14b zur Seite hin abgeleitet werden, was die Aerodynamik verbessert.

Zudem bilden die erste und die zweite Seitenflanke 14a, 14b je nach Größe dieses fünften Flankenwinkels α5 eine aktive bzw. eine passive Lenk- und Bremskante an der jeweiligen Erhebung E aus, die beim Lenken bzw. Bremsen die Längs- bzw. Querkräfte aufnehmen (aktiv) bzw. die jeweilige Erhebung E stützen (passiv), so dass sich der Grip des Reifens 4 auch während einer Kurvenfahrt erhöht.

In bevorzugten Ausführungen ist vorgesehen, dass mehrere derartiger Erhebungen E in Rautenform, die zumindest senkrecht zur Umfangsrichtung uR und ggf. auch in Umfangsrichtung uR (dann in mehreren Reihen R; R1, R2) benachbart zueinander am Reifen 4 angeordnet sind, eine Aeroelement-Anordnung 80 mit einer Anordnungs-Umfangslänge LU80 (in Umfangsrichtung uR) und einer Anordnungs-Bogenlänge B80 (senkrecht zur Umfangsrichtung uR) ausbilden, wie in Fig. 4A dargestellt. Die Aeroelemente 8 bzw. Erhebungen E in Rautenform sind zumindest senkrecht zur Umfangrichtung uR und ggf. auch in Umfangsrichtung uR innerhalb der Aeroelement-Anordnung 80 in einem Aeroelement-Abstand A8 zueinander angeordnet, der in den jeweiligen Richtungen auch unterschiedlich ausfallen kann, und ggf. auch so in Umfangsrichtung uR zueinander verschoben oder versetzt angeordnet, dass die Aeroelement-Anordnung 80 in einem bestimmten Anordnungs-Winkel γ zur Umfangsrichtung uR verläuft, beispielsweise in einem Anordnungs-Winkel γ von zwischen 30° und 50°, vorzugsweise 45°. Dieser Anordnungs-Winkel γ entspricht dabei gemäß dieser Ausführung dem zweiten bzw. vierten Flankenwinkel α2, α4, so dass auch durch den Verlauf der Aeroelement-Anordnungen 80 am Reifen 4 die oben beschriebene aerodynamische Optimierung erfolgen kann.

Innerhalb einer solchen Aeroelement-Anordnung 80 verlaufen die ersten und zweiten Seitenflanken 14a, 14b von benachbarten Erhebungen E in Rautenform vorzugsweise in etwa parallel zueinander, um dazwischen eine optimierte Luftleitung zu ermöglichen. Auch die Verwirbelungs-Flanke FV und die Gegenflanke FG von benachbarten Erhebungen E in Rautenform laufen parallel zueinander. Der Aeroelement-Abstand A8 senkrecht zur Umfangsrichtung uR kann beispielsweise zwischen 0.4mm und dem dreifachen der ersten Kantenlänge LK1 betragen und der Aeroelement-Abstand A8 in die Umfangsrichtung uR beispielsweise zwischen 0.4mm und dem dreifachen der zweiten Kantenlänge LK2.

Innerhalb einer solchen Aeroelement-Anordnung 80 kann der fünfte Flankenwinkel α5 der beiden Seitenflanken 14a, 14b mit zunehmendem Abstand der jeweiligen Erhebung E vom Reifenzenit Z zunehmen und der zweite und der vierte Flankenwinkel α2, α4 der jeweiligen Erhebung E mit zunehmendem Abstand vom Reifenzenit Z abnehmen, wobei dann für eine aerodynamische Optimierung vorzugsweise gilt, dass der zweite Flankenwinkel α2 außerhalb der Laufstreifenmitte 5M zwischen 30° und 85°, vorzugsweise zwischen 30° und 60°, insbesondere zwischen 40° und 50°, liegt. Die Erhebungen E in Rautenform verdrehen sich also mit zunehmendem Abstand zum Reifenzenit Z in der dargestellten Ausrichtung entgegen dem Uhrzeigersinn um ihren Mittelpunkt in der Deckfläche 13. Dies führt ergänzend dazu, dass der Anordnungs-Winkel γ der Aeroelement-Anordnung 80 mit zunehmendem Abstand zum Reifenzenit Z variiert, insbesondere ebenfalls abnimmt, so dass ein gebogener Verlauf vorliegt, vergleichbar zu dem gebogenen Verlauf der Vertiefung V in Fig. 3B. Gleichzeitig kann bei dieser Ausführung der Erhebung E in Rautenform auch die Aeroelement-Höhe H8 mit zunehmendem Abstand der jeweiligen Erhebung E vom Reifenzenit Z abnehmen.

Derartige als Rauten ausgeführte Erhebungen E können einzeln oder in den o.g. Aeroelement-Anordnungen 80 über den gesamten Umfang des Reifens 4 innerhalb lediglich eines Flächenbandes 8.i oder vorzugsweise innerhalb von maximal zwei Flächenbändern 8.i je Reifenseite gleichmäßig verteilt sein, wobei eine Positionierung am Laufstreifen 5 in den Laufstreifenschultern 5S und/oder auch in der Laufstreifenmitte 5M auch bis zum Reifenzenit Z, und/oder an den Seitenwänden 6 bis hin zu den Wulstbereichen 7 erfolgen kann. Es ist also ein variabler Verlauf der als rautenförmige Erhebung E ausgeführten Aeroelemente 8 möglich, wobei die Erhebungen E (einzeln oder in den o.g. Aeroelement-Anordnungen 80) auch bei dieser Ausführung beidseitig des Reifenzenits Z innerhalb der symmetrisch zum Reifenzenit Z in Umfangsrichtung uR verlaufenden Flächenbänder 8.i angeordnet sind, die über eine bestimmte Flächenband-Bogenlänge B8.i verlaufen. Die Flächenband-Bogenlänge B8.i des jeweiligen Flächenbandes 8.i senkrecht zur Umfangsrichtung uR wird dabei durch die Anordnung der Seitenflanken 14a, 14b, der Gegenflanke FG und der Verwirbelungs-Flanke FV der im jeweiligen Flächenband 8.i jeweils axial außen bzw. innen liegenden rautenförmigen Erhebungen E auf der jeweiligen Seite des Reifenzenits Z bestimmt. Demnach können die Flächenbänder 8.i mit den Erhebungen E also je nach Ausführung in dem Laufstreifen 5 und/oder in den Seitenwänden 6 und/oder in den Wulstbereichen 7 des Reifens 4 verlaufen. Je nach Ausführung ergibt sich also eine Flächenband-Bogenlänge B8.i der Flächenbänder 8.i von zwischen 100% und 0.1% der Reifen-Bogenlänge B4, die im Querschnitt des Reifens 4 zwischen dem Reifenzenit Z und dem jeweiligen Wulstbereich 7 gemessen wird.

Innerhalb der jeweiligen Aeroelement-Anordnung 80 können Aeroelemente 8, die als Erhebungen E in Rautenform ausgeführt sind auch mit Aeroelementen 8, die als kanalartige Vertiefungen V ausgeführt sind, kombiniert werden, wie in Fig. 2 und im Schnitt in Fig. 2C dargestellt. Demnach kann gemäß der dargestellten Ausführungsform unmittelbar zwischen in Umfangsrichtung uR benachbarten rautenförmigen Erhebungen E eine kanalartige Vertiefung V verlaufen, d.h. die Gegenflanke FG der rautenförmigen Erhebung E geht in Umfangsrichtung uR unmittelbar in die Gegenflanke FG der Vertiefung V über und die sich in Umfangsrichtung uR unmittelbar oder über die Grundfläche 9 anschließende Verwirbelungs-Flanke FV der Vertiefung V geht in die Verwirbelungs-Flanke FV der rautenförmigen Erhebung E über.

Es wechseln sich also innerhalb der Aeroelement-Anordnung 80 in Umfangsrichtung uR in drei Reihen R rautenförmige Erhebungen E (erste Reihe R1 und dritte Reihe R3) und mindestens eine kanalartige Vertiefung V (zweite Reihe R2) ab. Mehrere solcher Aeroelement-Anordnungen 80 sind wiederum innerhalb eines Flächenbandes 8.i gleichmäßig in Umfangsrichtung uR verteilt. Da die Erhebungen E innerhalb einer Reihe R senkrecht zu der Umfangsrichtung uR in einem bestimmten Aeroelement-Abstand A8 zueinander verlaufen, ist die demgegenüber durchgängig verlaufende Vertiefung V der in Umfangsrichtung uR benachbarten Reihe R der Aeroelement-Anordnung 80 in Zwischenbereichen Vz (s. Fig. 2) in Umfangsrichtung uR nicht von Erhebungen E umgeben. Die Zwischenbereiche Vz entsprechen demnach der Länge des Aeroelement-Abstandes A8 senkrecht zur Umfangsrichtung uR. Dadurch kann die (verwirbelte) Luft durchgängig zwischen den ersten und zweiten Seitenflanken 14a, 14b benachbarter Erhebungen E entlang der Oberfläche 4a in die Umfangsrichtung uR um den Reifen 4 geführt werden, ohne dass die Rotation des Reifens 4 einen zu großen Einfluss darauf nimmt.

Alternativ kann auch vorgesehen sein, dass innerhalb der jeweiligen Aeroelement-Anordnung 80 in mehreren Reihen R Aeroelemente 8, die jeweils als Erhebungen E in Rautenform ausgeführt sind, mit unterschiedlicher Aeroelement-Höhe H8 angeordnet sind, wie in der Schnittansicht gemäß Fig. 4B für drei Erhebungen E im Schnitt dargestellt. So sind in einer ersten Reihe R1 Erhebungen E mit einer ersten Aeroelement-Höhe H81 der Deckfläche 13 angeordnet und in Umfangsrichtung uR benachbart dazu in einer zweiten Reihe R2 Erhebungen E mit einer zweiten Aeroelement-Höhe H82 der Deckfläche 13, die geringer ist als die erste Aeroelement-Höhe H81. Daran schließen sich in Umfangsrichtung uR in einer dritten Reihe R3 Erhebungen E mit einer dritten Aeroelement-Höhe H83 der Deckfläche 13 an, die beispielsweise der ersten Aeroelement-Höhe H81 entspricht, zumindest aber größer als die zweite Aeroelement-Höhe H82 ist. Auf diese Weise wird durch die mittlere, zweite Reihe R2 eine Art Tasche 20 zwischen der Verwirbelungs-Flanke FV der Erhebung E in der dritten Reihe R3 und der Gegenflanke FG der Erhebung E in der ersten Reihe R1 gebildet. In dieser Tasche 20 kann die Luft effektiv verwirbelt werden, nachdem sie über die Verwirbelungs-Flanke FV der Erhebung E in der dritten Reihe R3 geströmt ist.

Gemäß Fig. 4C ist eine alternative Ausführung dargestellt, bei der innerhalb eines Flächenbandes 8.i zwei Aeroelement-Anordnungen 80 in Umfangsrichtung uR nebeneinanderliegend vorgesehen sind, wobei eine der Aeroelement-Anordnungen 80 lediglich durch eine Vertiefung V (wie dargestellt lediglich einreihig) gebildet ist und die benachbarte Aeroelement-Anordnung 80 lediglich Erhebungen E (einreihig (wie dargestellt) oder mehrreihig) aufweist, die in Rautenform ausgeführt sind und eine größere zweite Kantenlänge LK2 als in Fig. 4A aufweisen. Diese Aeroelement-Anordnungen 80 wechseln sich innerhalb eines Flächenbandes 8.i in Umfangsrichtung uR fortlaufend und gleichmäßig über den gesamten Reifenumfang alternierend ab. Fig. 2 stellt eine Alternative dazu dar, mit einer Kombination von ineinander übergehenden Erhebungen E und Vertiefungen V in mehreren Reihen R innerhalb einer der Aeroelement-Anordnungen 80.

Bei den dargestellten Ausführungen (Fig. 2, 4A, 4B, 4C) sind der erste und der zweite Flankenwinkel α1, α2 der jeweiligen Verwirbelungs-Flanken FV, der dritte und vierte Flankenwinkel α3, α4 der Gegenflanke FG und der fünfte Flankenwinkel α5 der jeweiligen Seitenflanken 14a, 14b und folglich auch die Anordnungs-Winkel γ der benachbarten Aeroelement-Anordnungen 80 entsprechend aneinander angeglichen, um über die gesamte aerodynamisch optimierte Fläche des Reifens 4 aneinander angepasste und gleichmäßige Verwirbelungen und eine optimierte Luftleitung zu erreichen.

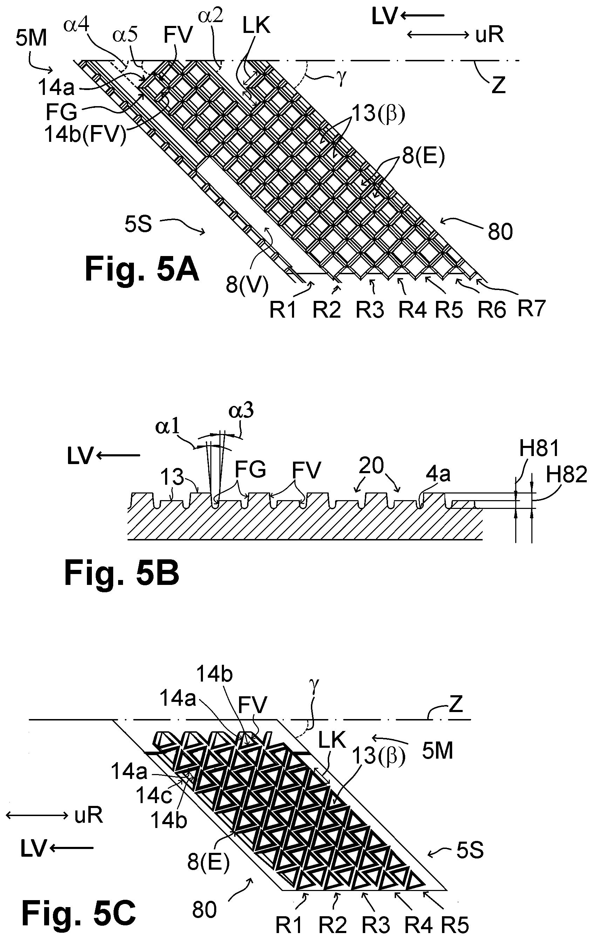

Gemäß Fig. 5A (Draufsicht) und Fig. 5B (Schnittansicht) kann die Erhebung E statt einer Rautenform auch eine quadratische Form aufweisen, bei der die Verwirbelungs-Flanke FV, die Gegenflanke FG und die zwei Seitenflanken 14a, 14b senkrecht zueinander verlaufen und jeweils eine identische Kantenlänge LK aufweisen, die beispielsweise zwischen 0.5mm und 6mm, vorzugsweise zwischen 1mm und 3mm, beträgt. Die Deckfläche 13 ist demzufolge ebenfalls quadratisch und kann je nach Ausführung unter dem Flächenwinkel β geneigt sein. Die Verwirbelungs-Flanke FV sorgt auch bei dieser Ausführung dafür, dass die anströmende Luft in Vorwärtslaufrichtung LV verwirbelt wird, um den Strömungswiderstand zu minimieren und damit die aerodynamischen Eigenschaften des Reifens 4 zu optimieren. Auch die zweite Seitenflanke 14b, die vom Reifenzenit Z weg weist, kann dabei je nach Anwinkelung gegenüber der Oberfläche 4a des Reifens 1 für eine zusätzliche Verwirbelung sorgen.

Bei dieser quadratischen Ausführung kann beispielsweise vorgesehen sein, dass die erste und die zweite Seitenflanke 14a, 14b der jeweiligen Erhebung E unter einem fünften Flankenwinkel α5 zur Umfangsrichtung uR verlaufen, der vorzugsweise zwischen 30° und 60°, bevorzugt 45°, beträgt, um darüber die Luft zumindest teilweise zur Seite hin abzuleiten. Die Verwirbelungs-Flanke FV und die Gegenflanke FG verlaufen entsprechend senkrecht dazu unter dem zweiten bzw. vierten Flankenwinkel α2, α4 zur Umfangsrichtung uR, der vorzugsweise ebenfalls zwischen 30° und 60°, vorzugsweise 45°, beträgt.

Der erste Flankenwinkel α1 der Verwirbelungs-Flanke FV und der dritte Flankenwinkel α3 der in Umfangsrichtung uR gegenüberliegenden Gegenflanke FG der jeweiligen quadratischen Erhebung E betragen bei dieser Ausführung bei einer gripoptimierten Ausrichtung des Reifens 4 vorzugsweise zwischen 0° und 45°, bevorzugt zwischen 5° und 20°, gegenüber der Normalen N, so dass auch die Gegenflanke FG als aktive Lenk- und Bremskante noch zu einer verbesserten Lenk- bzw. Bremswirkung bzw. zu einem verbesserten Grip beitragen kann. Je nachdem, ob der Reifen 4 eher im Hinblick auf den Grip oder die Aerodynamik optimiert wird, kann der dritte Flankenwinkel α3 auch flacher ausgeführt sein, wobei der dritte Flankenwinkel α3 bei einer aerodynamischen Optimierung des Reifens 4 beispielsweise zwischen 10° und 75°, insbesondere zwischen 40° und 70°, beträgt, wobei dann vorzugsweise α3>α1 gilt.

**Mehrere** derartiger quadratischer Erhebungen E können in einer Aeroelement-Anordnung 80 allein oder in Kombination mit einer Vertiefung V (vgl. Fig. 2, 2C und 4C (mit einer Rautenform), 5A) oder einer Erhebung E einer anderen Form (nicht dargestellt) in einer oder in mehreren Reihen R in die Umfangsrichtung uR bzw. senkrecht zu der Umfangsrichtung uR voneinander beabstandet sein, z.B. mit einem Anordnungs-Winkel γ von beispielsweise zwischen 90° und 45°. Mehrere dieser Aeroelement-Anordnungen 80 sind auch hier in Umfangsrichtung uR innerhalb eines Flächenbandes 8.i gleichmäßig über den gesamten Reifenumfang verteilt.

Auch bei dieser Ausführung kann vorgesehen sein, dass durch mindestens drei in Umfangsrichtung uR voneinander beabstandete quadratische Erhebungen E mit unterschiedlicher Aeroelement-Höhe H81, H82 eine Art Tasche 20 (vgl. Querschnitt aus Fig. 5B) ausgebildet wird, die für eine optimierte Verwirbelung sorgen kann. Auch die Variation der jeweiligen Flankenwinkel und der Aeroelement-Höhe H8, die vorzugsweise zwischen 0.5mm und 6mm, vorzugsweise zwischen 1mm und 3mm, beträgt, kann mit zunehmendem Abstand der jeweiligen Erhebung E vom Reifenzenit Z wie bei der rautenförmigen Erhebung E variieren. Vorzugsweise gilt dabei jedoch, dass der zweite Flankenwinkel α2 außerhalb der Laufstreifenmitte 5M stets zwischen 30° und 60°, insbesondere zwischen 40° und 50°, liegt, um eine aerodynamische Optimierung zu erreichen.

Auch derartige als Quadrate ausgeführte Erhebungen E können einzeln oder in den o.g. Aeroelement-Anordnungen 80 über den gesamten Umfang des Reifens 4 innerhalb lediglich eines Flächenbandes 8.i oder vorzugsweise innerhalb von maximal zwei Flächenbändern 8.i je Reifenseite gleichmäßig verteilt sein, wobei eine Positionierung am Laufstreifen 5 in den Laufstreifenschultern 5S und/oder auch in der Laufstreifenmitte 5M auch bis zum Reifenzenit Z, und/oder an den Seitenwänden 6 bis hin zu den Wulstbereichen 7 erfolgen kann. Es ist also ein variabler Verlauf der als quadratische Erhebung E ausgeführten Aeroelemente 8 möglich, wobei die Erhebungen E (einzeln oder in den o.g. Aeroelement-Anordnungen 80) auch bei dieser Ausführung beidseitig des Reifenzenits Z innerhalb der symmetrisch zum Reifenzenit Z in Umfangsrichtung uR verlaufenden Flächenbänder 8.i angeordnet sind, die über eine bestimmte Flächenband-Bogenlänge B8.i verlaufen. Die Flächenband-Bogenlänge B8.i des jeweiligen Flächenbandes 8.i senkrecht zur Umfangsrichtung uR wird dabei durch die Anordnung der Seitenflanken 14a, 14b, der Gegenflanke FG und der Verwirbelungs-Flanke FV der im jeweiligen Flächenband 8.i jeweils axial außen bzw. innen liegenden quadratischen Erhebungen E auf der jeweiligen Seite des Reifenzenits Z bestimmt. Demnach können die Flächenbänder 8.i mit den Erhebungen E also je nach Ausführung in dem Laufstreifen 5 und/oder in den Seitenwänden 6 und/oder in den Wulstbereichen 7 des Reifens 4 verlaufen. Je nach Ausführung ergibt sich also eine Flächenband-Bogenlänge B8.i der Flächenbänder 8.i von zwischen 100% und 0.1% der Reifen-Bogenlänge B4, die im Querschnitt zwischen dem Reifenzenit Z und dem jeweiligen Wulstbereich 7 gemessen wird.

Weiterhin können auch andere viereckige Formen für die Erhebung E vorgesehen sein, beispielsweise auch eine rechteckige Form, d.h. mit jeweils anderen Kantenlängen LK gegenüber einer quadratischen Ausführung der Erhebungen E. Dabei kann auch eine kanalartige Erhebung E in Form eines Rechtecks vorgesehen sein, die dann in Richtung senkrecht zur Oberfläche 4a invertiert zu der beschriebenen kanalartigen Vertiefung V (vgl. Fig. 3A) verläuft und dabei auch entsprechend vergleichbare Höhenverläufe, Flankenverläufe und Ausrichtungen gegenüber der Umfangsrichtung uR aufweisen kann.

Gemäß Fig. 5C kann die Erhebung E auch eine dreieckige Form haben, vorzugsweise als ein gleichschenkliges Dreieck, wobei diese dreieckige Erhebung E eine Aeroelement-Höhe H8 von zwischen 0.5mm und 6mm, vorzugsweise zwischen 1mm und 3mm, aufweist, wobei die Aeroelement-Höhe H8 mit **zunehmendem** Abstand zum Reifenzenit Z variieren kann, insbesondere kleiner werden kann. Eine solche dreieckförmige Erhebung E weist dabei die Verwirbelungs-Flanke FV und die erste und zweite Seitenflanke 14a, 14b, die beide als Gegenflanken FG wirken, auf, wobei die Verwirbelungs-Flanke FV und die beiden Seitenflanken 14a, 14b, die eine dreieckige Deckfläche 13 (ggf. unter dem Flächenwinkel β) begrenzen, jeweils eine identische Kantenlänge LK haben. Die Kantenlänge LK kann beispielsweise zwischen 0.5mm und 6mm, vorzugsweise zwischen 1mm und 3mm betragen.

Mehrere derartiger Erhebungen E in Dreieckform können in einer Aeroelement-Anordnung 80 allein oder in Kombination mit einer Vertiefung V (vgl. Fig. 2, 2C und 4C (mit einer Rautenform), 5A (mit einer quadratischen Form)) oder einer andersförmigen Erhebung E in einer oder in mehreren Reihen R in die Umfangsrichtung uR bzw. senkrecht zu der Umfangsrichtung uR voneinander beabstandet sein. Die Aeroelement-Anordnung 80 kann dabei in einem bestimmten Anordnungs-Winkel γ zur Umfangsrichtung uR verlaufen, beispielsweise zwischen 90° und 45°, und dabei mit zunehmendem Abstand zum Reifenzenit Z auch variieren, insbesondere geringer werden. Mehrere dieser Aeroelement-Anordnungen 80 sind in Umfangsrichtung uR innerhalb eines Flächenbandes 8.i gleichmäßig über den gesamten Reifenumfang verteilt.

Innerhalb einer Reihe R der Aeroelement-Anordnung 80 sind, wie in der Ausführungsform gemäß Fig. 5C dargestellt, benachbarte dreieckige Erhebungen E um 180° zueinander verdreht, wobei dann nur jede zweite Erhebung E eine Verwirbelungs-Flanke FV aufweist, die effektiv zu einer Verwirbelung der anströmenden Luft beitragen kann. Die jeweils dritte Seitenflanke 14c der dazwischenliegenden dreieckigen Erhebung E dient dann je nach Anwinkelung gegenüber der Oberfläche 4a des Reifens 4 beispielsweise als zusätzlich Bremskante, um eine gripverbessernde Wirkung zu erreichen.

Die Verwirbelungs-Flanke FV der jeweiligen dreieckigen Erhebung E verläuft unter dem ersten Flankenwinkel α1 von vorzugsweise zwischen 0° und 45°, bevorzugt zwischen 5° und 20°, gegenüber der Normalen N auf der Oberfläche 4a des Reifens 4, um eine ausreichende Steilheit zur Verwirbelung der Luft bereitzustellen. Die als Gegenflanke FG wirkende erste und zweite Seitenflanke 14a, 14b (und ggf. auch die dritte Seitenflanke 14c der um 180° verdrehten Erhebung E) können bei einer gripoptimierten Auslegung des Reifens 4 unter dem dritten Flankenwinkel α3 von ebenfalls zwischen 0° und 45°, bevorzugt zwischen 5° und 20°, verlaufen, um beispielsweise als aktive Lenk- und Bremsflanken zum Fahrverhalten optimal beitragen zu können. Um eine eher aerodynamische Optimierung zu erreichen, können die dritten Flankenwinkel α3 der nicht als Verwirbelungs-Flanken FV ausgebildeten Flanken jedoch auch flacher verlaufen, wobei der dritte Flankenwinkel α3 bei einer aerodynamischen Optimierung des Reifens 4 beispielsweise zwischen 10° und 75°, insbesondere zwischen 40° und 70°, beträgt, wobei dann vorzugsweise α3>α1 gilt. Zudem kann auch die taschenförmige Ausbildung (vgl. Fig. 4B, 5B) mit dreieckigen Erhebungen E unterschiedlicher Aeroelement-Höhe H8 auf diese dreieckige Ausführung übertragen werden.

Auch derartige als Dreiecke ausgeführte Erhebungen E können einzeln oder in den o.g. Aeroelement-Anordnungen 80 über den gesamten Umfang des Reifens 4 innerhalb lediglich eines Flächenbandes 8.i oder vorzugsweise innerhalb von maximal zwei Flächenbändern 8.i je Reifenseite gleichmäßig verteilt sein, wobei eine Positionierung am Laufstreifen 5 in den Laufstreifenschultern 5S und/oder auch in der Laufstreifenmitte 5M auch bis zum Reifenzenit Z, und/oder an den Seitenwänden 6 bis hin zu den Wulstbereichen 7 erfolgen kann. Es ist also ein variabler Verlauf der als dreieckige Erhebung E ausgeführten Aeroelemente 8 möglich, wobei die Erhebungen E (einzeln oder in den o.g. Aeroelement-Anordnungen 80) auch bei dieser Ausführung beidseitig des Reifenzenits Z innerhalb der symmetrisch zum Reifenzenit Z in Umfangsrichtung uR verlaufenden Flächenbänder 8.i angeordnet sind, die über eine bestimmte Flächenband-Bogenlänge B8.i verlaufen. Die Flächenband-Bogenlänge B8.i des jeweiligen Flächenbandes 8.i senkrecht zur Umfangsrichtung uR wird dabei durch die Anordnung der Seitenflanken 14a, 14b bzw. Gegenflanken FG und der Verwirbelungs-Flanke FV der im jeweiligen Flächenband 8.i jeweils axial außen bzw. innen liegenden dreieckigen Erhebungen E auf der jeweiligen Seite des Reifenzenits Z bestimmt. Demnach können die Flächenbänder 8.i mit den Erhebungen E also je nach Ausführung in dem Laufstreifen 5 und/oder in den Seitenwänden 6 und/oder in den Wulstbereichen 7 des Reifens 4 verlaufen. Je nach Ausführung ergibt sich also eine Flächenband-Bogenlänge B8.i der Flächenbänder 8.i von zwischen 100% und 0.1% der Reifen-Bogenlänge B4, die im Querschnitt zwischen dem Reifenzenit Z und dem jeweiligen Wulstbereich 7 gemessen wird.

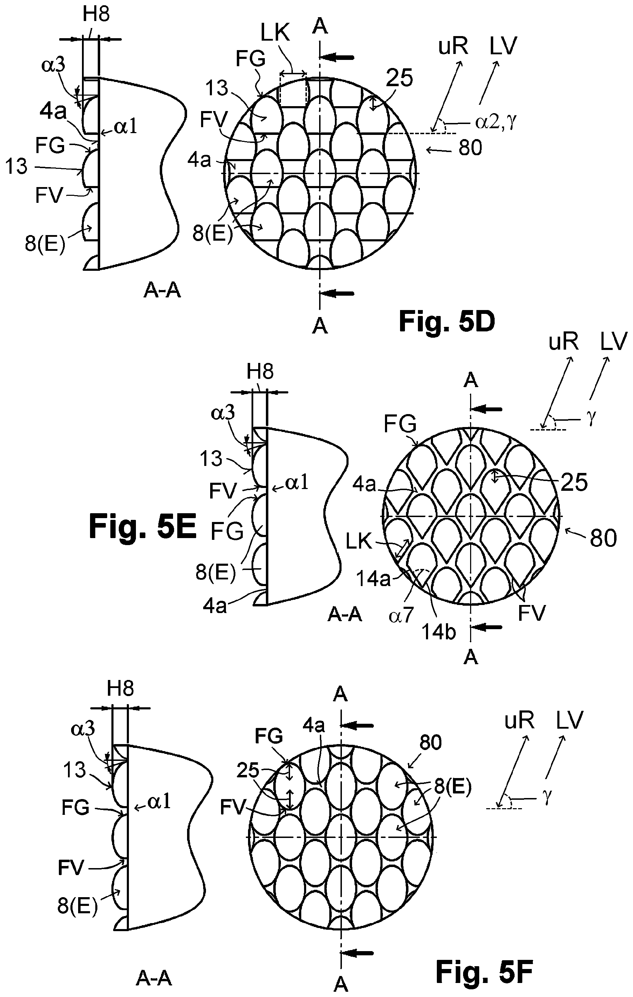

In den Figuren 5D, 5E und 5F sind weitere mögliche Ausführungen der Erhebungen E dargestellt, auf die die obigen Ausführungen zu den rautenförmigen, quadratischen, viereckigen und dreieckigen Erhebungen E analog anwendbar sind, insbesondere die Anwinkelung gegenüber der Normalen N auf der Oberfläche 4a, wenn die jeweiligen Flanken bei einer gripoptimierten Auslegung als Lenk- und/oder Bremskanten ausgeführt sind oder bei einer aerodynamischen Optimierung flacher verlaufen (vorzugsweise mit α3>α1).

Demnach ist gemäß Fig. 5D eine Erhebung E in einer Schuppenform, gemäß Fig. 5E eine Erhebung E mit einer Tropfenform und in Fig. Fig. 5F eine Erhebung E in Form eines Ellipsoid-Segments bzw. eines Kugel-Segments vorgesehen, die jeweils entsprechend den vorangehenden Ausführungen einzeln oder in einer Aeroelement-Anordnung 80 in einer oder in mehreren Reihen R über den gesamten Umfang des Reifens 4 gleichmäßig verteilt sein können, wobei eine Positionierung am Laufstreifen 5 in den Laufstreifenschultern 5S und/oder auch in der Laufstreifenmitte 5M auch bis zum Reifenzenit Z, und/oder an den Seitenwänden 6 bis hin zu den Wulstbereichen 7 erfolgen kann.

Es ist also ein variabler Verlauf der jeweiligen als Erhebung E ausgeführten Aeroelemente 8 möglich, wobei die Erhebungen E auch bei dieser Ausführung beidseitig des Reifenzenits Z innerhalb der symmetrisch zum Reifenzenit Z in Umfangsrichtung uR verlaufenden Flächenbänder 8.i (ein oder zwei je Reifenseite) angeordnet sind, die über eine bestimmte Flächenband-Bogenlänge B8.i verlaufen. Die Flächenband-Bogenlänge B8.i des jeweiligen Flächenbandes 8.i senkrecht zur Umfangsrichtung uR wird dabei durch die Ausdehnung der jeweiligen Erhebungen E auf der jeweiligen Seite des Reifenzenits Z bestimmt. Demnach können die Flächenbänder 8.i mit den Erhebungen E also je nach Ausführung in dem Laufstreifen 5 und/oder in den Seitenwänden 6 und/oder in den Wulstbereichen 7 des Reifens 4 verlaufen. Ja nach Ausführung ergibt sich also eine Flächenband-Bogenlänge B8.i der Flächenbänder 8.i von zwischen 100% und 0.1% der Reifen-Bogenlänge B4, die im Querschnitt zwischen dem Reifenzenit Z und dem jeweiligen Wulstbereich 7 gemessen wird.

Gemäß Fig. 5D ist vorgesehen, dass die Gegenflanke FG der schuppenförmigen Erhebung E, die in die Vorwärtslaufrichtung LV zeigt, in der Draufsicht eine abgerundete Form mit einem Radius 25 von zwischen 1mm und 10mm aufweist. Die Gegenflanke FG geht oberseitig in die schuppenförmige Deckfläche 13 über, die ggf. unter dem Flächenwinkel β geneigt oder abgerundet sein kann. Anschließend folgt in Umfangsrichtung uR die Verwirbelungs-Flanke FV, die vorzugsweise gerade und mit einer Kantenlänge LK, die vorzugsweise dem 1.5 bis 2-fachen Radius 25 der Gegenflanke FV entspricht, verläuft.

Die abgerundete Gegenflanke FG wirkt bei einer gripoptimierten Auslegung auch als Lenk- bzw. Bremskante und kann entsprechend gegenüber der Normalen N auf der Oberfläche 4a angewinkelt sein, vorliegend mit einem entsprechend abgerundeten Verlauf, der in die Deckfläche 13 unmittelbar übergeht. Die Gegenflanke FG steht bei einer gripoptimierten Auslegung beispielsweise unter einem dritten Flankenwinkel α3 von vorzugsweise zwischen 0° und 45°, bevorzugt zwischen 5° und 20°, zur Normalen N von der Oberfläche 4a des Reifens 4 ab.

Die abgerundete Form ermöglicht dabei gleichzeitig auch ein effektives Führen der Luft um die abgerundete Gegenflanke FG herum, was die Aerodynamik weiter verbessert. Bei einer aerodynamischen Optimierung beträgt der dritte Flankenwinkel α3 beispielsweise zwischen 10° und 75°, insbesondere zwischen 40° und 70°, wobei dann vorzugsweise α3>α1 gilt.

Die geradlinige Verwirbelungs-Flanke FV verläuft unter dem zweiten Flankenwinkel α2 von vorzugsweise zwischen 30° und 90°, vorzugsweise zwischen 30° und 60°, zur Umfangsrichtung uR, d.h. die Schuppe kann gegenüber der Umfangsrichtung uR auch gedreht sein, um die oben genannten aerodynamische Optimierung zu erzielen, insbesondere bei einem zweiten Flankenwinkel α2 von zwischen 30° und 60°, insbesondere von zwischen 40° und 50°, außerhalb der Laufstreifenmitte 5M. Die Verwirbelungs-Flanke FV steht zudem unter dem ersten Flankenwinkel α1 von vorzugsweise zwischen 0° und 45°, bevorzugt zwischen 5° und 20°, zur Normalen N von der Oberfläche 4a des Reifens 4 ab. Um die anströmende Luft bei einer Vorwärtsfahrt verwirbeln zu können, ist diese Verwirbelungs-Flanke FV entgegen der Vorwärtslaufrichtung LV ausgerichtet.

Befinden sich mehrere derartiger schuppenförmiger Erhebungen E innerhalb einer Aeroelement-Anordnung 80, die dann auch in dieser Ausführung unter einem bestimmten Anordnungs-Winkel γ zur Umfangsrichtung uR verlaufen kann, können die Erhebungen E entweder mit einem bestimmten Aeroelement-Abstand A8 voneinander beabstandet sein (in und/oder quer zur Umfangsrichtung uR) oder aber die Erhebungen E überlappen sich zumindest bereichsweise, wie bei der Schuppenhaut eines Fisches und wie in Fig. 5D angedeutet. Auch mehrere dieser Aeroelement-Anordnungen 80 sind dann innerhalb lediglich eines Flächenbandes 8.i oder vorzugsweise innerhalb von maximal zwei Flächenbändern 8.i je Reifenseite, gleichmäßig über den Reifenumfang verteilt.

Gemäß Fig. 5E ist vorgesehen, dass die Gegenflanke FG der tropenförmigen Erhebung E, die in die Vorwärtslaufrichtung LV zeigt, wie auch bei der Schuppenform in der Draufsicht eine abgerundete Form mit einem Radius 25 von zwischen 1mm und 10mm aufweist. Die Gegenflanke FG geht dann oberseitig in die tropfenförmige Deckfläche 13 über, die ggf. unter dem Flächenwinkel β geneigt oder abgerundet sein kann. Anschließend folgen in Umfangsrichtung uR eine erste und eine zweite Seitenflanke 14a, 14b, die mit vorzugsweise derselben Kantenlänge LK entweder geradlinig oder leicht gewölbt verlaufen und sich in einem Endpunkt treffen, um eine Tropfenform zu bilden. Die erste Seitenflanke 14a und die zweite Seitenflanke 14b verlaufen dabei unter einem siebenten Flankenwinkel α7 zueinander, der vorzugsweise zwischen 5° und 45° beträgt und damit die Länge der Erhebung E definiert. Je nach Anwinkelung der ersten Seitenflanke 14a bzw. der zweiten Seitenflanke 14b gegenüber der Umfangsrichtung uR kann die tropfenförmige Erhebung E auch gegenüber der Umfangsrichtung uR gedreht sein, wie in Fig. 5E dargestellt. Die beiden Seitenflanken 14a, 14b bilden dabei je nach Anwinkelung gegenüber der Umfangsrichtung uR die Verwirbelungs-Flanke FV bei dieser tropfenförmigen Erhebung E aus, an der die Luft nahezu senkrecht abfallen kann.

Die abgerundete Gegenflanke FG wirkt bei einer gripoptimierten Auslegung auch als Lenk- bzw. Bremskante und kann entsprechend gegenüber der Normalen N auf der Oberfläche 4a angewinkelt sein, vorliegend mit einem entsprechend abgerundeten Verlauf, der in die Deckfläche 13 unmittelbar übergeht. Die Gegenflanke FG steht bei einer gripoptimierten Auslegung beispielsweise unter einem dritten Flankenwinkel α3 von vorzugsweise zwischen 0° und 45°, bevorzugt zwischen 5° und 20°, zur Normalen N von der Oberfläche 4a des Reifens 4 ab. Die abgerundete Form ermöglicht dabei gleichzeitig auch ein effektives Führen der Luft beidseitig um die abgerundete Gegenflanke FV herum, was die Aerodynamik weiter verbessert. Bei einer aerodynamischen Optimierung beträgt der dritte Flankenwinkel α3 beispielsweise zwischen 10° und 75°, insbesondere zwischen 40° und 70°, wobei dann vorzugsweise α3>α1 gilt.

Die Verwirbelungs-Flanke(n) FV bzw. die beiden Seitenflanken 14a, 14b stehen unter dem ersten Flankenwinkel α1 von vorzugsweise zwischen 0° und 45°, bevorzugt zwischen 5° und 20°, zur Normalen N von der Oberfläche 4a des Reifens 4 ab. Um die anströmende Luft bei einer Vorwärtsfahrt verwirbeln zu können, ist diese Verwirbelungs-Flanke FV entgegen der Vorwärtslaufrichtung LV ausgerichtet.

Befinden sich mehrere derartiger tropfenförmiger Erhebungen E innerhalb einer Aeroelement-Anordnung 80, die dann auch in dieser Ausführung unter einem bestimmten Anordnungs-Winkel γ zur Umfangsrichtung uR verlaufen kann, können die Erhebungen E entweder mit einem bestimmten Aeroelement-Abstand A8 voneinander beabstandet sein (in und/oder quer zur Umfangsrichtung uR) oder aber die Erhebungen E überlappen sich zumindest bereichsweise. Auch mehrere dieser Aeroelement-Anordnungen 80 sind dann innerhalb lediglich eines Flächenbandes 8.i oder vorzugsweise innerhalb von maximal zwei Flächenbändern 8.i je Reifenseite, gleichmäßig über den Reifenumfang verteilt.

Gemäß Fig. 5F ist vorgesehen, dass die Erhebungen E in Form eines Ellipsoid-Segments bzw. eines Kugel-Segments eine abgerundete Verwirbelungs-Flanke FV aufweisen, die entgegen der Vorwärtslaufrichtung LV ausgerichtet ist, und eine abgerundete Gegenflanke FG aufweisen, die in Vorwärtslaufrichtung LV ausgerichtet ist. Die beiden abgerundeten Flanken FV, FG weisen jeweils einen Radius 25 von zwischen 1mm und 10mm auf.

Die Verwirbelungs-Flanke FV ist bei dieser Ausführung entgegen der Vorwärtslaufrichtung LV ausgerichtet, so dass die anströmende Luft verwirbelt werden kann. Die abgerundete Form ermöglicht dabei nicht nur eine Verwirbelung, sondern gleichzeitig auch ein effektives Führen der Luft beidseitig um die abgerundete Verwirbelungs-Flanke FV herum, was die Aerodynamik weiter verbessert. Diese Verwirbelungs-Flanke FV verläuft an ihren Berührpunkten an der Oberfläche 4a des Reifens 4 in etwa unter dem ersten Flankenwinkel α1 von vorzugsweise zwischen 0° und 45°, bevorzugt zwischen 5° und 20°, zur Normalen N, wobei der erste Flankenwinkel α1 aufgrund der abgerundeten Oberfläche der Kugel bzw. des Ellipsoids mit steigendem Abstand zur Oberfläche 4a des Reifens 4 kontinuierlich größer wird, bis die Verwirbelungs-Flanke FV in die gewölbte Deckfläche 13 übergeht. Vergleichbar gilt dieser Verlauf für die Gegenflanke FG, der somit dem abgerundeten Verlauf der Gegenflanke FG der schuppenförmigen (Fig. 5D) bzw. tropfenförmigen (Fig. 5E) Erhebung E entspricht und daher dieselben aerodynamischen Eigenschaften aufweist.

Befinden sich mehrere derartiger Erhebungen E in Form eines Ellipsoid-Segments bzw. eines Kugel-Segments innerhalb einer Aeroelement-Anordnung 80, die dann auch in dieser Ausführung unter einem bestimmten Anordnungs-Winkel γ zur Umfangsrichtung uR verlaufen kann, können die Erhebungen E entweder mit einem bestimmten Aeroelement-Abstand A8 voneinander beabstandet sein (in und/oder quer zur Umfangsrichtung uR) oder aber die Erhebungen E überlappen sich zumindest bereichsweise. Auch mehrere dieser Aeroelement-Anordnungen 80 sind dann innerhalb lediglich eines Flächenbandes 8.i oder vorzugsweise innerhalb von maximal zwei Flächenbändern 8.i je Reifenseite, gleichmäßig über den Reifenumfang verteilt.

Bei sämtlichen beschriebenen Erhebungen E und auch Vertiefungen V wurde bisher angenommen, dass die Deckfläche 13 bzw. die Grundfläche 9 planar bzw. kalottenförmig bzw. kuppelförmig (Schuppe, Tropfen, Kugel, Ellipsoid) ausgeführt ist. Es kann jedoch auch vorgesehen sein, dass diese Flächen 13, 9 mit mehreren Aussparungen versehen sind, die z.B. kugel-, halbkugel-, quaderförmig oder dergleichen ausgeführt sind, so dass auf den Erhebungen E bzw. in den Vertiefungen V eine zusätzliche Oberflächenrauigkeit erzeugt wird, an der auch zusätzliche Verwirbelungen stattfinden können. Dadurch können aerodynamische, rollwiderstandsbedingte und optischen Eigenschaften verbessert werden.

Jegliche beschriebene Erhebungen E können zudem grundsätzlich auch als Vertiefungen V ausgeführt sein, d.h. das jeweilige Aeroelement 8 ist dann in seiner jeweiligen Form invertiert zu der Erhebung E ausgeführt, verläuft also in invertierter Form über die jeweiligen Flanken von der Oberfläche 4a in den Reifen 4 hinein. Die Form der Grundfläche 9 dieser Vertiefung V entspricht dann also der Form der jeweiligen Deckfläche 13. Das jeweils als Vertiefung V ausgeführte Aeroelement 8 ist weiterhin um 180° gegenüber der Variante als Erhebung E verdreht, da die anströmende Luft bei einer Vertiefung V in Vorwärtslaufrichtung LV an der in Umfangsrichtung uR gegenüberliegenden Seite an der Verwirbelungs-Flanke FV abfällt.

Bei sämtlichen Ausführungen der Aeroelemente 8 als Vertiefung V und/oder als Erhebung E ist zudem vorgesehen, dass
- für den Fall, dass keines der Aeroelemente 8 in die Laufstreifenmitte 5M (innerhalb des ersten Winkelbereiches 5a bzw. innerhalb der ersten Laufstreifen-Bogenlänge B5a) ragen und/oder die Aeroelemente 8 auch nicht in den Seitenwänden 6 und nicht in den Wulstbereichen 7 verlaufen, d.h. ausschließlich in der Laustreifenschulter 5S angeordnet sind, ein Flächenanteil S8 sämtlicher Aeroelemente 8 am Reifen 4 mindestens 9% einer Gesamtfläche S4 des Reifens 4, d.h. zwischen 9% und 25%, beträgt, und
- für den Fall, dass die jeweiligen Aeroelemente 8 auch in die Laufstreifenmitte 5M (innerhalb des ersten Winkelbereiches 5a bzw. innerhalb der ersten Laufstreifen-Bogenlänge B5a), insbesondere auch bis zum Reifenzenit Z verlaufen, und/oder die Aeroelemente 8 auch in den Seitenwänden 6 und/oder den Wulstbereichen 7 verlaufen, der Flächenanteil S8 sämtlicher Aeroelemente 8 am Reifen 4 auch weniger als 9% der Gesamtfläche S4 des Reifens 4 betragen kann, d.h. der Flächenanteil S8 in dem Fall zwischen ca. 0.1% und 100% liegt. Der Flächenanteil S8 des jeweiligen Aeroelements 8 wird dabei zwischen der Verwirbelungs-Flanke FV, der Gegenflanke FG (insofern vorhanden) und den vorhandenen Seitenflanken 14a, 14b (14c) über die Grundfläche 9 (bei einer Vertiefung V) bzw. die Deckfläche 13 (bei einer Erhöhung E) gemessen. Die Gesamtfläche S4 des Reifens 4 bezieht sich auf die sichtbare Oberfläche 4a des Reifens 4, d.h. die Oberfläche 4a zwischen den beiden Wulstbereichen 7. Weiterhin kann vorgesehen sein, dass der Flächenanteil S8 der Aeroelemente 8 innerhalb eines Flächenbandes 8.i an der Gesamtfläche des jeweiligen Flächenbandes 8.i größer als 25% beträgt, um also möglichst viele Aeroelemente 8 innerhalb eines Flächenbandes 8.i bereitzustellen.

Weiterhin kann bei sämtlichen Ausführungen der Aeroelemente 8 als Vertiefung V und/oder als Erhebung E zudem vorgesehen sein, dass die Aeroelement-Höhe H8 bzw. die Aeroelement-Tiefe T8 in Abhängigkeit der nominellen Reifenbreite 4B gewählt wird, wobei bei einer nominellen Reifenbreite 4B von zwischen 20mm und 45mm eine Aeroelement-Höhe H8 bzw. eine Aeroelement-Tiefe T8 von zwischen 0.1mm und 4.0mm, bevorzugt zwischen 1.0mm und 3.5mm, gewählt wird, und bei einer nominellen Reifenbreite 4B von zwischen 45mm und 70mm eine Aeroelement-Höhe H8 bzw. eine Aeroelement-Tiefe T8 von zwischen 1.0mm und 8.0mm, bevorzugt zwischen 2.5mm und 6.5mm, gewählt wird.

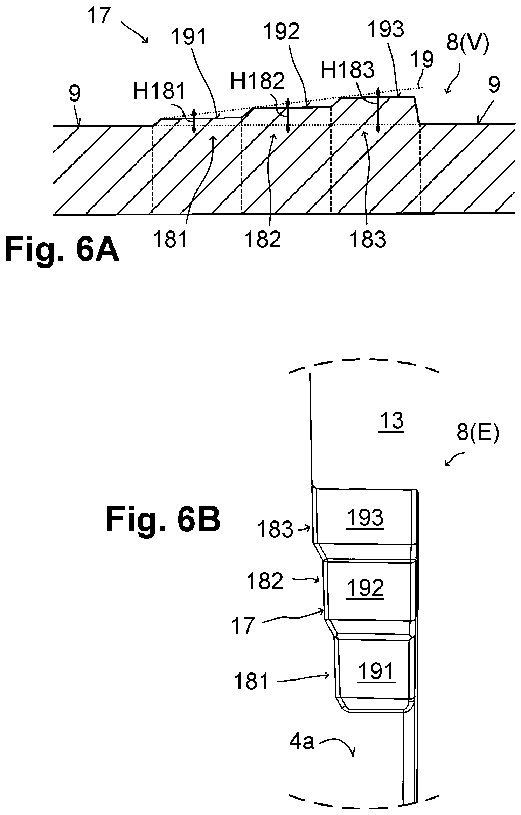

Um im Betrieb des Reifens 4 bzw. der Radanordnung 1 feststellen zu können, ob bzw. inwieweit sich das jeweilige Aeroelement 8 abgenutzt hat, ist bzw. sind ergänzend am Reifen 4 mindestens eine Indikatoreinheit 17 (s. Fig. 3A, 6A (Schnitt C-C aus Fig. 3A), 6B) vorgesehen, die innerhalb der symmetrisch zum Reifenzenit Z in Umfangsrichtung uR verlaufenden Flächenbänder 8.i angeordnet ist bzw. sind. Die jeweilige Indikatoreinheit 17 kann dazu
- bei einer Ausführung des Aeroelementes 8 als Vertiefung V in der Vertiefung V selbst angeordnet sein, d.h. beispielsweise auf der Grundfläche 9 der Vertiefung V angeordnet sein, wie in Fig. 3A und 6A dargestellt, oder aber
- bei einer Ausführung des Aeroelementes 8 als Erhebung E Bestandteil dieser Erhebung E sein oder benachbart zu dieser auf der Oberfläche 4a des Reifens 4 ausgebildet sein oder sich auf der Oberfläche 4a des Reifens 4 in demselben Flächenband 8.i der jeweiligen Erhebung E bzw. auf demselben Durchmesser wie die jeweilige Erhebung E befinden, wie in Fig. 6B beispielhaft dargestellt.

Es ist also eine Indikatoreinheit 17 vorgesehen, die sich im normalen Betrieb des Reifens 4 in demselben Maße abnutzt, wie auch das jeweilige Aeroelement 8. Damit unterscheidet sich die Indikatoreinheit 17 von einem Laufflächen-Abnutzungs-Indikator (Tread-Wear-Indicator), der anzeigt, wie stark die Profilierung des Laufstreifens 5 abgenutzt ist. Ein solcher Laufflächen-Abnutzungs-Indikator ist in der Regel im Reifenzenit Z oder zumindest in der Laufstreifenmitte 5M angeordnet, d.h. an einer Stelle, an der sich der Laufstreifen 5 in der Regel am stärksten abnutzt. Vorliegend ist eine solche Positionierung jedoch nicht gewünscht, da sich die Aeroelemente 8 bevorzugt neben dem Reifenzenit Z, insbesondere außerhalb der Laufstreifenmitte 5M befinden. Entsprechend ist auch die Indikatoreinheit 17 vorzugsweise außerhalb der Laufstreifenmitte 5M angeordnet.

Da die Aeroelemente 8 je nach Ausführung auf unterschiedlichen Durchmessern des Reifens 4 angeordnet sind, können auch mehrere Indikatoreinheiten 17 gleichmäßig verteilt innerhalb des jeweiligen Flächenbandes 8.i vorhanden sein. Die jeweilige Indikatoreinheit 17 ist dabei wie in der Schnittansicht in Fig. 6A dargestellt aus mindestens zwei, wie dargestellt drei Indikatorbereichen 18i, mit i = 1, 2, 3 zusammengesetzt, wobei jeder Indikatorbereich 18i eine andere Indikator-Höhe H18i über der Oberfläche 4a aufweist. In der Indikator-Höhe H18i schließt der jeweilige Indikatorbereich 18i mit einer Indikatorstirnseite 19i ab. Bei einem unbenutzten Reifen 4 verläuft der Indikatorbereich 18i mit der größten Indikator-Höhe H18i bei einer Vertiefung V vorzugsweise bündig zu der Oberfläche 4a des Reifens 4 und bei einer Erhebung E vorzugsweise bündig zu der Deckfläche 13 der jeweiligen Erhebung E.

In Fig. 6B ist eine Indikatoreinheit 17 für eine Erhebung E dargestellt, die in den jeweiligen Indikatorbereichen 18i mit der jeweiligen Indikator-Höhe H18i von der Oberfläche 4a des Reifens 4 absteht. Bei einer Anordnung innerhalb einer Vertiefung V wird die Oberfläche 4a aus Fig. 6B stattdessen durch die Grundfläche 9 der Vertiefung V gebildet, d.h. die jeweiligen Indikatorbereiche 18i stehen mit der jeweiligen Indikator-Höhe H18i von der Grundfläche 9 der Vertiefung V ab, wie in Fig. 6A dargestellt.

Die Indikatorbereiche 18i und/oder die Indikatorstirnseite 19i können in unterschiedlichen Farben ausgeführt sein, so dass für einen Betrachter eindeutig erkenntlich wird, welcher Indikatorbereich 18i bereits abgenutzt wird. Auf diese Weise kann aufgrund der Anordnung relativ zu den Aeroelementen 8 auf den Grad der Abnutzung der jeweiligen Aeroelemente 8 geschlossen werden, insbesondere wenn zwischen den jeweiligen Indikatorbereichen 18i eine gleichmäßig abnehmende Verteilung der Indikator-Höhe H18i vorliegt, indem beispielsweise die Indikatorstirnseite 19i entlang einer monoton abfallenden Indikatorflanke 19 (gestrichelt in Fig. 6A) verlaufen.

Die Indikatorbereiche 18i können dabei in und/oder senkrecht zur Umfangsrichtung uR benachbart zueinander angeordnet sein und wie dargestellt treppenartig ineinander übergehen oder beabstandet zueinander verlaufen. In beiden Fällen nutzen sich die Indikatorbereiche 18i ab einem bestimmten Abnutzungsgrad des Reifens 4 ebenfalls mit ab, was durch eine farbliche Veränderung wahrgenommen werden kann.

### Bezugszeichenliste

- 1: Radanordnung
- 2: Fahrrad
- 3: Felge
- 3a: Felgenhorn
- 4: Reifen
- 4a: Oberfläche des Reifens 4
- 4B: nominelle Reifenbreite
- 4E: Reifen-Äquator
- 4R: nomineller Reifen-Radius
- 5: Laufstreifen
- 5a: erster Winkelbereich der Laufstreifenmitte 5M
- 5b: zweiter Winkelbereich der Laufstreifenschulter 5S
- 5c: Gesamt-Winkelbereich des Laufstreifens 5
- 5d: Außenfläche des Laufstreifens 5
- 5M: Laufstreifenmitte
- 5S: Laufstreifenschulter
- 6: Seitenwand
- 6a: Außenseite der Seitenwand
- 7: Wulstbereich
- 8: Aeroelement
- 8.i: i. Flächenband
- 9: Grundfläche
- 10a: erster Zwischenraum
- 10b: zweiter Zwischenraum
- 11: Übergangsflanke
- 11a: Oberkante der Übergangsflanke 11
- 13: Deckfläche
- 14a: erste Seitenflanke
- 14b: zweite Seitenflanke
- 14c: dritte Seitenflanke
- 17: Indikatoreinheit
- 18i: i. Indikatorbereich
- 19: Indikatorflanke
- 19i: i. Indikatorstirnseite
- 20: Tasche
- 25: Radius
- 80: Aeroelement-Anordnung
- α1: erster Flankenwinkel (FV zur Normalen N)
- α2: zweiter Flankenwinkel (FV zur Umfangsrichtung uR)
- α3: dritter Flankenwinkel (FG zur Normalen N)
- α4: vierter Flankenwinkel (FG zur Umfangsrichtung uR)
- α5: fünfter Flankenwinkel (14a, 14b zur Umfangsrichtung uR)
- α7: siebenter Flankenwinkel (zwischen 14a und 14b)
- β: Flächenwinkel
- γ: Anordnungs-Winkel
- A8: Aeroelement-Abstand
- aR: axiale Richtung
- B4: Reifen-Bogenlänge
- B5a: erste Laufstreifen-Bogenlänge der (halben) Laufstreifenmitte 5M
- B5b: zweite Laufstreifen-Bogenlänge der Laufstreifenschulter 5S
- B5c: Gesamt-Laufstreifen-Bogenlänge
- B8.i: i. Flächenband-Bogenlänge
- B80: Anordnungs-Bogenlänge
- BV: Vertiefungs-Bogenlänge
- E: Erhebung
- Ff: führende Flanke
- Fn: nachlaufende Flanke
- FV: Verwirbelungs-Flanke
- FG: Gegenflanke
- H8: Aeroelement-Höhe
- K: Karkasslage
- LK: Kantenlänge
- LK1: erste Kantenlänge
- LK2: zweite Kantenlänge
- LU80: Anordnungs-Umfangslänge
- LUV: Vertiefungs-Umfangslänge
- LV: Vorwärtslaufrichtung
- N: Normale auf der Oberfläche 4a
- R: Reihe
- Ri: i. Reihe
- S4: Gesamtfläche des Reifens 4
- S8: Flächenanteil der Aeroelemente 8
- T8: Aeroelement-Tiefe
- T8min: Minimalwert der Aeroelement-Tiefe T8
- T8max: Maximalwert der Aeroelement-Tiefe T8
- T8red: reduzierte Aeroelement-Tiefe
- uR: Umfangsrichtung
- V: Vertiefung
- Va: erstes Ende der Vertiefung V
- Vb: zweites Ende der Vertiefung V
- Vz: Zwischenbereich der Vertiefung V
- Z: Reifenzenit

## Patentansprüche

1. Reifen (4) für eine Radanordnung (1), mit einer festgelegten Vorwärtslaufrichtung (LV) und mit einem in Umfangsrichtung (uR) verlaufenden Laufstreifen (5), der sich in axialer Richtung (aR) beidseitig eines Reifenzenits (Z) über jeweils eine Gesamt-Laufstreifen-Bogenlänge (B5c) und jeweils einen Gesamt-Winkelbereich (5c) erstreckt, wobei der Laufstreifen (5) eine den Reifenzenit (Z) überdeckende Laufstreifenmitte (5M) und sich in axialer Richtung (aR) beidseitig daran anschließende Laufstreifenschultern (5S) aufweist, wobei sich in axialer Richtung (aR) jeweils Seitenwände (6) an die Laufstreifenschultern (5S) anschließen, die sich jeweils bis zu Wulstbereichen (7) des Reifens (4) erstrecken,
wobei auf einer Oberfläche (4a) des Reifens (4) innerhalb von Flächenbändern (8.i), die beidseitig des Reifenzenits (Z) symmetrisch zueinander liegen und die jeweils in die Umfangsrichtung (uR) verlaufen, zumindest in Umfangsrichtung (uR) zueinander beabstandete Aeroelemente (8) angeordnet sind,
wobei die Aeroelemente (8) jeweils eine Verwirbelungs-Flanke (FV) aufweisen zum Verwirbeln von entgegen der Vorwärtslaufrichtung (LV) entlang der Oberfläche (4a) des Reifens (4) strömender Luft, sowie jeweils eine Gegenflanke (FG), die der Verwirbelungs-Flanke (FV) in Umfangsrichtung (uR) gegenüberliegt, wobei die Verwirbelungs-Flanke (FV) des jeweiligen Aeroelementes (8) unter einem ersten Flankenwinkel (α1) zu einer Normalen (N) auf der Oberfläche (4a) des Reifens (4) und unter einem zweiten Flankenwinkel (α2) zu der Umfangsrichtung (uR) des Reifens (4) verläuft, wobei der erste Flankenwinkel (α1) zwischen 0° und 45°, insbesondere zwischen 5° und 20°, beträgt,
**dadurch gekennzeichnet, dass**
die Aeroelemente (8) innerhalb des jeweiligen Flächenbandes (8.i) zumindest in der Laufstreifenschulter (5S) des Laufstreifens (5) und/oder in den Seitenwänden (6) und/oder in den Wulstbereichen (7) verlaufen, und
wobei der zweite Flankenwinkel (α2) außerhalb der Laufstreifenmitte (5M) zwischen 30° und 85°, vorzugsweise zwischen 30° und 60°, insbesondere zwischen 40° und 50°, beträgt.

2. Reifen (4) nach Anspruch 1,
**dadurch gekennzeichnet, dass**
die Laufstreifenmitte (5M) ausgehend von dem Reifenzenit (Z) beidseitig in axialer Richtung (aR) über jeweils eine erste Laufstreifen-Bogenlänge (B5a) verläuft und die beiden sich daran anschließenden Laufstreifenschultern (5S) jeweils über eine zweite Laufstreifen-Bogenlänge (B5b) verlaufen, wobei die erste Laufstreifen-Bogenlänge (B5a) und die zweite Laufstreifen-Bogenlänge (B5b) zusammen die Gesamt-Laufstreifen-Bogenlänge (B5c) ergeben, wobei
- die erste Laufstreifen-Bogenlänge (B5a) zwischen 20% und 45% eines nominellen Reifenradius (4R) beträgt; und/oder
- die zweite Laufstreifen-Bogenlänge (B5b) zwischen 60% und 85% eines nominellen Reifenradius (4R) beträgt,
wobei die Gesamt-Laufstreifen-Bogenlänge (B5c) vorzugsweise zwischen 105% und 130% eines nominellen Reifenradius (4R) beträgt.

3. Reifen (4) nach Anspruch 1 oder 2,
**dadurch gekennzeichnet, dass**
die Laufstreifenmitte (5M) ausgehend von dem Reifenzenit (Z) beidseitig in axialer Richtung (aR) innerhalb eines ersten Winkelbereiches (5a) verläuft und die beiden sich daran anschließenden Laufstreifenschultern (5S) jeweils innerhalb eines zweiten Winkelbereiches (5b) verlaufen, wobei der erste Winkelbereich (5a) und der zweite Winkelbereich (5b) zusammen den Gesamt-Winkelbereich (5c) ergeben, wobei
- der erste Winkelbereich (5a) zwischen 10° und 35° überdeckt; und/oder;
- der zweite Winkelbereich (5b) zwischen 10° und 50° überdeckt,
wobei der Gesamt-Winkelbereich (5c) vorzugsweise zwischen 20° und 85°, bevorzugt zwischen 30° und 75°, besonders bevorzugt von zwischen 50° und 60°, überdeckt.

4. Reifen (4) nach einem der vorhergehenden Ansprüche,
**dadurch gekennzeichnet, dass**
die Gegenflanke (GF) des jeweiligen Aeroelementes (8) unter einem dritten Flankenwinkel (α3) zu einer Normalen (N) auf der Oberfläche (4a) des Reifens (4) verläuft, wobei der dritte Flankenwinkel (α3) größer als 10° beträgt, und
wobei der dritte Flankenwinkel (α3) vorzugsweise größer gleich dem ersten Flankenwinkel (α1) ist.

5. Reifen (4) nach einem der vorhergehenden Ansprüche,
**dadurch gekennzeichnet, dass**
- mindestens ein Aeroelement (8) innerhalb der jeweiligen Flächenbänder (8.i) an dem Reifen (4) sowohl innerhalb der Laufstreifenschulter (5S) als auch innerhalb der Seitenwand (6) und/oder innerhalb der Laufstreifenmitte (5M) verläuft, und/oder
- mindestens ein Aeroelement (8) innerhalb der jeweiligen Flächenbänder (8.i) an dem Reifen (4) sowohl innerhalb der jeweiligen Seitenwand (6) als auch innerhalb des jeweiligen Wulstbereiches (7) verläuft.

6. Reifen (4) nach einem der vorhergehenden Ansprüche,
**dadurch gekennzeichnet, dass**
- für den Fall, dass sämtliche Aeroelemente (8) innerhalb der jeweiligen Flächenbänder (8.i) an dem Reifen (4) ausschließlich in der Laufstreifenschulter (5S) verlaufen, ein Flächenanteil (S8) sämtlicher Aeroelemente (8) am Reifen (4) zwischen 9% und 25% einer sichtbaren Gesamtfläche (S4) des Reifens (4) beträgt, und/oder der Flächenanteil (S8) sämtlicher Aeroelemente (8) innerhalb eines Flächenbandes (8.i) an der Gesamtfläche des jeweiligen Flächenbandes (8.i) größer als 25% beträgt, und
- für den Fall, dass die Aeroelemente (8) innerhalb der jeweiligen Flächenbänder (8.i) an dem Reifen (4) nicht oder nicht ausschließlich in der Laufstreifenschulter (5S) angeordnet sind, beispielsweise in der Laufstreifenmitte (5M) und/oder in den Seitenwänden (6) und/oder in den Wulstbereichen (7) verlaufen, der Flächenanteil (S8) sämtlicher Aeroelemente (8) am Reifen (4) zwischen 0.1% und 100% der sichtbaren Gesamtfläche (S4) des Reifens (4) beträgt und/oder der Flächenanteil (S8) sämtlicher Aeroelemente (8) innerhalb eines Flächenbandes (8.i) an der Gesamtfläche des jeweiligen Flächenbandes (8.i) größer als 5% beträgt.

7. Reifen (4) nach einem der vorhergehenden Ansprüche,
**dadurch gekennzeichnet, dass**
sämtliche Aeroelemente (8) am Reifen (4) beidseitig des Reifenzenits (Z) innerhalb von maximal zwei Flächenbändern (8.i) je Reifenseite, vorzugsweise lediglich innerhalb eines Flächenbandes (8.i) je Reifenseite, angeordnet sind.

8. Reifen (4) nach einem der vorhergehenden Ansprüche,
**dadurch gekennzeichnet, dass**
innerhalb eines Flächenbandes (8.i) an dem Reifen (4) als Aeroelemente (8) lediglich Erhebungen (E) oder lediglich Vertiefungen (V) oder eine Kombination aus Erhebungen (E) und Vertiefungen (V), die sich innerhalb eines Flächenbandes (8.i) zumindest in die Umfangsrichtung (uR) vorzugsweise abwechseln, angeordnet sind.

9. Reifen (4) nach Anspruch 8,
**dadurch gekennzeichnet, dass**
- die Verwirbelungs-Flanke (FV) bei einer Ausführung des jeweiligen Aeroelements (8) als Erhebung (E) unter dem ersten Flankenwinkel (α1) gegenüber der Normalen (N) von der Oberfläche (4a) des Reifens (4) absteht und in Vorwärtslaufrichtung (LV) gesehen vorzugsweise eine nachlaufende Flanke (Fn) des jeweiligen Aeroelements (8) ist, und
- die Verwirbelungs-Flanke (FV) bei einer Ausführung des jeweiligen Aeroelements (8) als Vertiefung (V) unter dem ersten Flankenwinkel (α1) gegenüber der Normalen (N) von der Oberfläche (4a) des Reifens (4) ausgehend in den Reifen (4) hineinragt und in Vorwärtslaufrichtung (LV) gesehen vorzugsweise eine führende Flanke (Fn) des jeweiligen Aeroelements (8) ist.

10. Reifen (4) nach Anspruch 8 oder 9,
**dadurch gekennzeichnet, dass**
die als Erhebungen (E) ausgeführten Aeroelemente (8) eine Aeroelement-Höhe (H8) aufweisen, die zwischen 0.1mm und 8mm, vorzugsweise zwischen 1mm und 6.5mm, beträgt, und/oder
die als Vertiefungen (V) ausgeführten Aeroelemente (8) eine Aeroelement-Tiefe (T8) aufweisen, die zwischen 0.1mm und 8mm, vorzugsweise zwischen 0.5mm und 3.5mm, beträgt,
wobei die Aeroelement-Höhe (H8) und/oder die Aeroelement-Tiefe (T8) vorzugsweise abhängig von einer nominellen Reifenbreite (4B) gewählt sind.

11. Reifen (4) nach Anspruch 10,
**dadurch gekennzeichnet, dass**
die Aeroelement-Höhe (H8) über die jeweilige Erhebung (E) variiert, beispielsweise eine Deckfläche (13) mit einem Flächenwinkel (β) angewinkelt zu der Oberfläche (4a) des Reifens (4) verläuft,
wobei die Aeroelement-Höhe (H8) insbesondere von in der Laufstreifenmitte (5M) angeordneten Erhebungen (E) zur Laufstreifenmitte (5M) hin abfällt.

12. Reifen (4) nach Anspruch 10 oder 11,
**dadurch gekennzeichnet, dass**
die Aeroelement-Tiefe (T8) über die jeweilige Vertiefung (V) variiert, insbesondere bei einer Anordnung der Vertiefung (V) in der Reifenschulter (5S) maximal ist und zu der Laufstreifenmitte (5M) hin und/oder zu der Seitenwand (6) hin abnimmt.

13. Reifen (4) nach einem der Ansprüche 10 bis 12,
**dadurch gekennzeichnet, dass**
sich innerhalb eines Flächenbandes (8.i) mindestens zwei als Erhebungen (E) ausgeführte Aeroelemente (8) und/oder mindestens drei als Vertiefungen (V) ausgeführte Aeroelemente (8) in die Umfangsrichtung (uR) und/oder quer zu der Umfangsrichtung (uR) benachbart zueinander liegen,
wobei unmittelbar nebeneinanderliegende Erhebungen (E) unterschiedliche Aeroelement-Höhen (H8) und unmittelbar nebeneinanderliegende Vertiefungen (V) unterschiedliche Aeroelement-Tiefen (T8) aufweisen, so dass sich innerhalb der mindestens drei Erhebungen (E) oder innerhalb der mindestens drei Vertiefungen (V) Taschen (20) ausbilden.

14. Reifen (4) nach einem der vorhergehenden Ansprüche,
**dadurch gekennzeichnet, dass**
der zweite Flankenwinkel (α2) der Verwirbelungs-Flanke (FV) über die Ausdehnung des jeweiligen Aeroelementes (8) variiert, insbesondere mit zunehmendem Abstand vom Reifenzenit (Z) abnimmt, so dass sich ein gekrümmter Verlauf des jeweiligen Aeroelements (8) ergibt, wobei der zweite Flankenwinkel (α2) außerhalb der Laufstreifenmitte (5M) zwischen 30° und 85°, vorzugsweise zwischen 30° und 60°, insbesondere zwischen 40° und 50°, liegt.

15. Reifen (4) nach einem der vorhergehenden Ansprüche,
**dadurch gekennzeichnet, dass**
die Aeroelemente (8) eine Querschnittsform aufweisen, die ausgewählt ist aus der Gruppe bestehend aus: Rautenform, Schuppenform, Quadratform, Rechteckform, Tropfenform, Ellipsenform, Kreisform, wobei die Querschnittsform des jeweiligen Aeroelementes (8) vorzugsweise gegenüber der Umfangsrichtung (uR) verdreht ist, um die Verwirbelungs-Flanke (FV) in dem zweiten Flankenwinkel (α2) zu der Umfangsrichtung (uR) auszurichten.

16. Reifen (4) nach einem der vorhergehenden Ansprüche,
**dadurch gekennzeichnet, dass**
die in axialer Richtung (aR) beidseitig des Reifenzenits (Z) symmetrisch zueinander liegenden Flächenbänder (8.i) in Umfangsrichtung (uR) gegeneinander versetzt am Reifen (4) angeordnet sind.

17. Reifen (4) nach einem der vorhergehenden Ansprüche,
**dadurch gekennzeichnet, dass**
innerhalb mindestens eines der in Umfangsrichtung (uR) verlaufenden Flächenbänder (8.i), in denen die Aeroelemente (8) angeordnet sind, mindestens eine Indikatoreinheit (17) angeordnet ist, wobei die Indikatoreinheit (17) nicht in der Laufstreifenmitte (5M) angeordnet ist, zum Angeben einer Abnutzung der Aeroelemente (8) in dem jeweiligen Flächenband (8.i).
